(19) Europäisches Patentamt / European Patent Office / Office européen des brevets

(11) **EP 4 422 106 A1**

(12) **EUROPEAN PATENT APPLICATION**
published in accordance with Art. 153(4) EPC

(43) Date of publication:
**28.08.2024 Bulletin 2024/35**

(21) Application number: **22882808.3**

(22) Date of filing: **17.10.2022**

(51) International Patent Classification (IPC):
**H04L 5/00** $^{(2006.01)}$     **H04W 72/04** $^{(2023.01)}$

(52) Cooperative Patent Classification (CPC):
**H04L 5/00; H04L 27/00; H04W 72/04**

(86) International application number:
**PCT/CN2022/125699**

(87) International publication number:
**WO 2023/066202 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 CN 202111237648**

(71) Applicant: **Beijing Unisoc Communications
Technology Co., Ltd.
Beijing 100083 (CN)**

(72) Inventor: **WANG, Hualei
Beijing 100083 (CN)**

(74) Representative: **Mewburn Ellis LLP
Aurora Building
Counterslip
Bristol BS1 6BX (GB)**

(54) **RESOURCE MAPPING METHOD AND APPARATUS FOR REFERENCE SIGNAL, AND TERMINAL AND NETWORK DEVICE**

(57) A resource mapping method and apparatus for a reference signal (RS), a terminal device, and a network device are provided in embodiments of the disclosure. The method includes the following. A network device transmits configuration information. A terminal device receives the configuration information. The terminal device determines a first transmission comb offset corresponding to each of L sounding reference signal (SRS) antenna ports in an SRS resource, according to the configuration information. The first transmission comb offset is used to determine a frequency-domain starting position corresponding to each of the L SRS antenna ports, and a value of L is an integer greater than 4. The network device may transmit configuration information to the terminal device, so that the terminal device can determine, according to the configuration information, the transmission comb offset, i.e., the first transmission comb offset, corresponding to each of the L (L > 4) SRS antenna ports in the SRS resource, and thus the frequency-domain starting position corresponding to each of the L SRS antenna ports may be determined according to the first transmission comb offset to realize SRS resource mapping and an SRS resource pattern.

FIG. 2

Processed by Luminess, 75001 PARIS (FR)

**Description**

TECHNICAL FIELD

This disclosure relates to the field of communication technologies, and in particular, to a resource mapping method and apparatus for a reference signal (RS), a terminal device, and a network device.

BACKGROUND

In 3rd generation partnership project (3GPP) new radio (NR), a terminal device can transmit a sounding reference signal (SRS) to a network device, so that the network device can perform resource scheduling, link adaptation, beam management, power control, and so on according to the SRS.
Currently, in NR release 15 (R15)/R16/R17, the number of SRS antenna ports in an SRS resource is 1, 2, or 4, i.e., the maximum number of SRS antenna ports in the SRS resource is 4. However, in existing standard protocols, for the case where the maximum number of SRS antenna ports in the SRS resource exceeds 4, there is no specific solution for determination of SRS resource mapping and an SRS resource pattern.

SUMMARY

A resource mapping method and apparatus for a reference signal (RS), a terminal device, and a network device are provided in the disclosure, so that it is expected that a network configures a transmission comb offset, i.e., a first transmission comb offset, corresponding to each of L (L > 4) sounding reference signal (SRS) antenna ports in an SRS resource, and thus a frequency-domain starting position corresponding to each of the L SRS antenna ports may be determined according to the first transmission comb offset to realize SRS resource mapping and an SRS resource pattern.
In a first aspect, a resource mapping method for an RS is provided in embodiments of the disclosure. The method includes the following. Configuration information is obtained. A first transmission comb offset corresponding to each of L SRS antenna ports in an SRS resource is determined according to the configuration information. The first transmission comb offset is used to determine a frequency-domain starting position corresponding to each of the L SRS antenna ports, and a value of L is an integer greater than 4.
In a second aspect, a resource mapping method for an RS is provided in embodiments of the disclosure. The method includes the following. Configuration information is transmitted. The configuration information is used to determine a first transmission comb offset corresponding to each of L SRS antenna ports in an SRS resource. The first transmission comb offset is used to determine a frequency-domain starting position corresponding to each of the L SRS antenna ports, and a value of L is an integer greater than 4.
As can be seen, in embodiments of the disclosure, the network device may transmit configuration information to the terminal device, so that the terminal device can determine, according to the configuration information, the transmission comb offset, i.e., the first transmission comb offset, corresponding to each of the L (L > 4) SRS antenna ports in the SRS resource, and thus the frequency-domain starting position corresponding to each of the L SRS antenna ports may be determined according to the first transmission comb offset to realize SRS resource mapping and an SRS resource pattern.
In a third aspect, a resource mapping apparatus for an RS is provided in embodiments of the disclosure. The apparatus includes an obtaining unit and a determining unit. The obtaining unit is configured to obtain configuration information. The determining unit is configured to determine a first transmission comb offset corresponding to each of L SRS antenna ports in an SRS resource, according to the configuration information. The first transmission comb offset is used to determine a frequency-domain starting position corresponding to each of the L SRS antenna ports, and a value of L is an integer greater than 4.
In a fourth aspect, a resource mapping apparatus for an RS is provided in embodiments of the disclosure. The apparatus includes a transmitting unit. The transmitting unit is configured to transmit configuration information. The configuration information is used to determine a first transmission comb offset corresponding to each of L SRS antenna ports in an SRS resource. The first transmission comb offset is used to determine a frequency-domain starting position corresponding to each of the L SRS antenna ports, and a value of L is an integer greater than 4.
In a fifth aspect, the operations of the method designed in the first aspect are applied to a terminal device.
In a sixth aspect, the operations of the method designed in the second aspect are applied to a network device.
In a seventh aspect, a terminal device is provided in embodiments of the disclosure. The terminal device includes a processor, a memory, and computer programs or instructions stored in the memory. The processor is configured to execute the computer programs or instructions to implement the operations of the method designed in the first aspect.
In an eighth aspect, a network device is provided in embodiments of the disclosure. The network device includes a processor, a memory, and computer programs or instructions stored in the memory. The processor is configured to execute the computer programs or instructions to implement the operations of the method designed in the second aspect.

In a ninth aspect, a chip is provided in embodiments of the disclosure. The chip includes a processor. The processor is configured to perform the operations of the method designed in the first aspect or the second aspect.

In a tenth aspect, a chip module is provided in embodiments of the disclosure. The chip module includes a transceiver component and a chip, where the chip includes a processor. The processor is configured to perform the operations of the method designed in the first aspect or the second aspect.

In an eleventh aspect, a computer-readable storage medium is provided in embodiments of the disclosure. The computer-readable storage medium is configured to store computer programs or instructions which, when executed by a processor, enable the processor to perform the operations of the method designed in the first aspect or the second aspect.

In a twelfth aspect, a computer program product is provided in embodiments of the disclosure. The computer program product includes computer programs or instructions which, when executed by a processor, enable the processor to perform the operations of the method designed in the first aspect or the second aspect.

BRIEF DESCRIPTION OF THE DRAWINGS

In order to describe technical solutions in embodiments of the disclosure more clearly, the following may give a brief introduction to accompanying drawings required for describing embodiments of the disclosure.

FIG. 1 is a schematic diagram of an architecture of a wireless communication system in embodiments of the disclosure.
FIG. 2 is a schematic flow chart illustrating a resource mapping method for a reference signal (RS) in embodiments of the disclosure.
FIG. 3 is a block diagram of functional units of a resource mapping apparatus for an RS in embodiments of the disclosure.
FIG. 4 is another block diagram of functional units of a resource mapping apparatus for an RS in embodiments of the disclosure.
FIG. 5 is a schematic structural diagram of a terminal device in embodiments of the disclosure.
FIG. 6 is a schematic structural diagram of a network device in embodiments of the disclosure.

DETAILED DESCRIPTION

In order to facilitate better understanding of solution of the disclosure by those skilled in the art, the following will illustrate clearly and completely technical solutions of embodiments of the disclosure with reference to accompanying drawings of embodiments of the disclosure. Apparently, embodiments illustrated herein are merely some, rather than all, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, software, product, or apparatus including a series of steps or units is not limited to the listed steps or units, on the contrary, it can optionally include other steps or units that are not listed; alternatively, other steps or units inherent to the process, method, product, or device can be included either.

The term "embodiment" referred to herein means that a particular feature, structure, or feature described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

It may be noted that "connection" mentioned in embodiments of the disclosure refers to various connection manners such as direct connection or indirect connection to achieve communication between devices, without any limitation. The terms "network" and "system" used in embodiments of the disclosure represent the same concept, and a communication system means a communication network.

The technical solutions in embodiments of the disclosure can be applicable to various wireless communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 6th-generation (6G) system, or other communication systems.

It may be noted that, a conventional wireless communication system supports a limited number of connections and therefore is easy to implement. However, with development of communication technology, a wireless communication system not only supports a conventional wireless communication system but also supports, for example, device to device (D2D) communication, machine to machine (M2M) communication, machine type communication (MTC), vehicle to vehicle (V2V) communication, and narrow band internet of things (NB-IoT). Therefore, the technical solutions in embodiments of the disclosure can also be applicable to these wireless communication systems.

Optionally, a wireless communication system in embodiments of the disclosure can be applicable to a beamforming scenario, a carrier aggregation (CA) scenario, a dual connectivity (DC) scenario, a standalone (SA) scenario, etc.

Optionally, the wireless communication system in embodiments of the disclosure can be applicable to an unlicensed spectrum, where the unlicensed spectrum can also be regarded as a shared spectrum. Alternatively, the wireless communication system in embodiments of the disclosure can also be applicable to a licensed spectrum, where the licensed spectrum can also be regarded as an unshared spectrum.

Since in embodiments of the disclosure, various embodiments may be described in conjunction with terminal devices and network devices, the following may specifically describe a terminal device and a network device involved.

Specifically, the terminal device may be user equipment (UE), remote UE, relay UE, an access terminal, a subscriber unit, a subscriber station, a mobile station, a mobile platform, a remote station, a mobile device, a user terminal, an intelligent terminal, a wireless communication device, a user agent, or a user apparatus. It may be noted that the relay device is a terminal device that can provide relay forwarding services to other terminal devices (including remote terminals). In addition, the terminal device may be a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, or a terminal device in a next-generation communication system, a terminal device in a future evolved public land mobile network (PLMN), which is not specifically limited herein.

Furthermore, the terminal device can be deployed on land, including indoor or outdoor, handheld, wearable, or vehicle-mounted; on water (e.g., a ship); and also in the air (e.g., an aircraft, a balloon, and a satellite).

Furthermore, the terminal device may be a mobile phone, a pad, a computer with wireless transceiving functions, a terminal device for virtual reality (VR), a terminal device for augmented reality (AR), a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

Furthermore, the terminal device may be an apparatus with transmitting and receiving functions, such as a chip system. The chip system may include a chip and other discrete devices.

Specifically, the network device may be a device used for communication with a terminal device and is responsible for radio resource management (RRM), quality of service (QoS) management, data compression and encryption, data transmission and reception at an air interface side. The network device may be a base station (BS) in a communication system, or a device deployed in a radio access network (RAN) to provide wireless communication functions. For example, the network device may be a base transceiver station (BTS) in the GSM or CDMA communication system, or may be a node B (NB) in the WCDMA communication system, or may be an evolved node B (eNB or eNodeB) in the LTE system, a next generation evolved node B (ng-eNB) in the NR communication system, a next generation node B (gNB) in the NR communication system, a master node (MN) in a dual link architecture, or a second node or a secondary node (SN) in the dual link architecture, which is not specifically limited herein.

Furthermore, the network device may also be other devices in a core network (CN), such as access and mobility management function (AMF), user plan function (UPF), etc. The network device may also be an access point (AP) in WLAN, a relay station, a communication device in a future evolved PLMN, a communication device in the NTN, etc.

Furthermore, the network device may be an apparatus that provides wireless communication functions for the terminal device, such as a chip system. The chip system may include a chip and other discrete devices.

Furthermore, the network device can communicate with an internet protocol (IP) network, for example, the Internet, private IP networks, or other data networks.

It may be noted that in some network deployments, the network device may be an independent node to achieve all functions of the base station mentioned above. The network device may include a centralized unit (CU) and a distributed unit (DU), such as a gNB-CU and a gNB-DU. The network device may further include an active antenna unit (AAU). The CU achieves part of functions of the network device, and the DU achieves part of functions of the network device. For example, the CU is responsible for processing non-real-time protocols and services, to achieve functions of a radio resource control (RRC) layer, a service data adaptation protocol (SDAP) layer, and a packet data convergence protocol (PDCP) layer. The DU is responsible for processing physical-layer protocols and real-time services, to achieve functions of a radio link control (RLC) layer, a medium access control (MAC) layer, and a physical (PHY) layer. In addition, the AAU may achieve part of processing functions of the PHY layer and related functions of radio frequency (RF) processing and active antennas. Since information of the RRC layer may be finally converted into information of the PHY layer or be obtained by transforming the information of the PHY layer, in the network deployment, high-layer signaling (such as RRC-layer signaling) can be considered as transmitted by the DU or by both the DU and the AAU. It may be understood that, the network device may include at least one of a CU, a DU, or an AAU. In addition, the CU can be considered as a network device in an RAN or in a CN, which may not be limited herein.

Furthermore, the network device may have a mobility, e.g., the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station deployed on land, on water, or on other locations.

Furthermore, the network device can provide a service for a cell, and the terminal device in the cell can communicate with the network device through transmission resources (e.g., spectrum resources). The cell may include a macro cell, a small cell, a metro cell, a micro cell, a pico cell, a femto cell, or the like.

With reference to the above illustration, an exemplary explanation of the wireless communication system in embodiments of the disclosure is provided below.

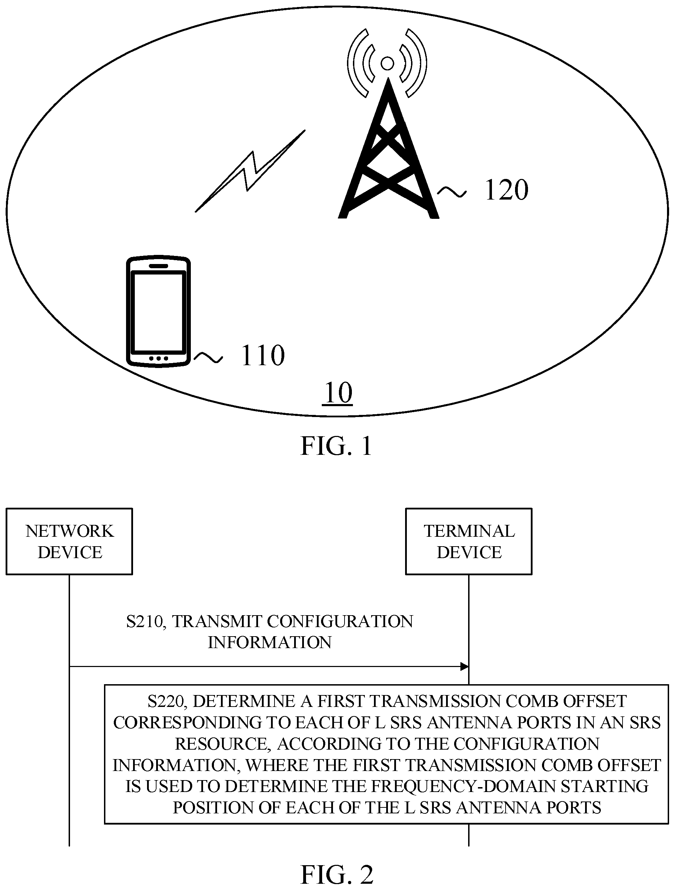

Exemplarily, a wireless communication system in embodiments of the disclosure is illustrated in FIG. 1. The wireless communication system 10 may include a terminal device 110 and a network device 120, where the network device 120 can communicate with the terminal device 110. Meanwhile, the network device 120 can provide communication coverage for a specific geographical area and can communicate with terminal devices 110 in the coverage range.

Optionally, the wireless communication system 10 may further include multiple network devices, and a certain number of terminal devices may be included in a coverage range of each of the multiple network devices, which may not be specifically limited herein.

Optionally, the wireless communication system 10 may further include a network controller, a mobility management entity (MME), or other network entities, which may not be specifically limited herein.

Optionally, communication between the network device and the terminal device in the wireless communication system 10 may be wireless communication or wired communication, which may not be specifically limited herein.

In NR of 3rd generation partnership project (3GPP), a terminal device can transmit a sounding reference signal (SRS) to a network device, so that the network device can perform resource scheduling, link adaptation, beam management, power control, and so on according to the SRS. Currently, in NR release 15 (R15)/R16/R17, the number of SRS antenna ports in an SRS resource is 1, 2, or 4, i.e., the maximum number of SRS antenna ports in the SRS resource is 4. However, in existing standard protocols, for the case where the maximum number of SRS antenna ports in the SRS resource exceeds 4, there is no specific solution for determination of SRS resource mapping and an SRS resource pattern.

In summary, in embodiments of the disclosure, in the case where the maximum number of SRS antenna ports in the SRS resource exceeds 4, in order to determine SRS resource mapping and an SRS resource pattern, it is expected that the network device transmits configuration information to the terminal device, so that the terminal device can determine, according to the configuration information, a transmission comb offset, i.e., a first transmission comb offset, corresponding to each of L (L > 4) SRS antenna ports in an SRS resource, and thus a frequency-domain starting position corresponding to each of the L SRS antenna ports may be determined according to the first transmission comb offset to determine SRS resource mapping and an SRS resource pattern.

In order to realize the above technical solutions, other contents, concepts, and meanings that may be involved therein are further explained below.

1. SRS

An SRS is an important uplink RS in a 5G/NR system and is widely used in various functions in the NR system as follows for example.

(1) The SRS is used in a terminal sounding process of obtaining downlink channel state information (CSI).
(2) The SRS is used for uplink beam management.
(3) The SRS is used for positioning.
(4) The SRS is used to cooperate with codebook-based uplink transmission, such as frequency-domain scheduling and determination of rank/a precoding matrix indicator (PMI)/a modulation coding scheme (MCS).
(5) The SRS is used to cooperate with non-codebook based uplink transmission, such as frequency-domain scheduling and determination of an SRS resource indicator (SRI)/an MCS.

In addition, three different transmission modes, i.e., periodic, semi-persistent, and aperiodic, may be supported for SRSs, which are illustrated as follows.

(1) Periodic SRS and semi-persistent SRS

A periodic SRS refers to an SRS transmitted with a period, and the period and a slot offset for the periodic SRS are configured via RRC signaling. If the terminal device receives relevant configuration information configured via the RRC signaling, the terminal device transmits an SRS with a certain period according to the relevant information until the relevant configuration information becomes invalid. In addition, spatial relation information for a periodic SRS is also configured via RRC signaling. The spatial relation information implicitly indicates a transmit beam, and the spatial relation information may indicate a channel state information-reference signal (CSI-RS), a synchronization signal/physical broadcast channel block (SS/PBCH block, SSB), or an SRS. Therefore, the terminal device may determine a transmit beam for an SRS resource according to a receive beam for the CSI-RS/SSB indicated by the spatial relation information, or determine a transmit beam for the SRS according to a transmit beam for a reference SRS.

A period and a slot offset for a semi-persistent SRS are configured via RRC signaling, and activation signaling and de-activation signaling for the semi-persistent SRS are carried in a medium access control control element (MAC CE). The terminal device starts SRS transmission with a period in response to reception of the activation signaling, and stops SRS transmission until the terminal device receives the de-activation signaling. Meanwhile, spatial relation information for the semi-persistent SRS is carried in the MAC CE carrying the activation signaling.

After the terminal device receives a period and a slot offset that are configured via RRC signaling, the terminal device determines a slot that can be used for SRS transmission according to

$$\left(N_{slot}^{frame,\mu} n_f + n_{s,f}^{\mu} - T_{offset}\right) \bmod T_{SRS} = 0$$, where $N_{slot}^{frame,\mu}$ represents the number of slots per radio frame when a subcarrier is configured as $\mu$, $n_f$ represents a system frame number (SFN), $n_{s,f}^{\mu}$ represents a slot index in a radio frame when a subcarrier is configured as $\mu$, $T_{offset}$ represents a slot offset configured via RRC signaling, and $T_{SRS}$ represents a period configured via RRC signaling.

(2) Aperiodic SRS

An aperiodic SRS refers to an SRS that is transmitted aperiodically. The network device can trigger, via downlink control information (DCI), the terminal device to transmit an SRS aperiodically. In addition, trigger signaling for triggering aperiodic SRS transmission can be carried in DCI used for physical uplink shared channel (PUSCH) scheduling or physical downlink shared channel (PDSCH) scheduling in a UE-specific search space or carried in DCI format 2_3 in a common search space. In particular, DCI format 2_3 can be used for not only triggering aperiodic SRS transmission, but also configuring a group of transmission control protocol (TPC) commands for an SRS transmitted by a UE or a group of TPC commands for an SRS on a carrier. Meanwhile, the DCI carries a 2-bit SRS request to trigger aperiodic SRS transmission.

In response to reception of trigger signaling (e.g., DCI) for aperiodic SRS transmission, the terminal device performs aperiodic SRS transmission according to an SRS resource set indicated by the trigger signaling. A slot offset between the trigger signaling and aperiodic SRS transmission is configured via higher-layer signaling (e.g., RRC signaling). Meanwhile, the network device indicates a configuration parameter per SRS resource set to the terminal device via higher-layer signaling in advance, where the configuration parameter includes a time-frequency resource and the like. In addition, for each SRS resource in a SRS resource set triggered, the terminal device may determine, according to spatial relation information for the SRS resource, a transmit beam used for transmitting an SRS corresponding to the SRS resource, where the spatial relation information may be configured for each SRS resource via RRC information.

2. Configuration information

It may be noted that the terminal device may obtain the configuration information transmitted by the network device, during cell search, cell access, cell residence, initial access, random access, uplink resource scheduling, downlink resource scheduling, and other processes, which is not specifically limited herein.

In embodiments of the disclosure, the configuration information may include information element (IE) SRS-Config and the like, and SRS transmission may be configured via IE SRS-Config. IE SRS-Config may define a list of higher-layer parameters SRS-Resources and a list of higher-layer parameters SRS-ResourceSets, where a set of higher-layer parameters SRS-Resources may be defined for each SRS resource set.

In addition, the network device can trigger transmission for an SRS resource set via a configured aperiodic higher-layer parameter (e.g. aperiodicSRS-ResourceTrigger or aperiodicSRS-ResourceTriggerList).

In some embodiments, the configuration information may include at least one of: a transmission comb number

$K_{\text{TC}}$, a second transmission comb offset $\overline{k}_{\text{TC}}$, the number of cyclic shifts $n^{\text{cs}}_{\text{SRS}}$, or the maximum number of cyclic shifts $n^{\text{cs,max}}_{\text{SRS}}$. The following describes that the configuration information may include one or more of these parameters, and meanings of these parameters.

3. SRS resource, a value of L, and a port index of each SRS port among L SRS ports

The terminal device may be configured with one or more SRS resource sets according to an indication of a higher-layer parameter (e.g., SRS-ResourceSet or SRS-PosResourceSet). Each SRS resource set configured by SRS-ResourceSet may be configured with K (K ≥ 1) SRS resources that are configured via the higher-layer parameter SRS-Resource, where a maximum value of K may be determined according to a capability of the terminal device.

The SRS resource set applicability is configured by a parameter usage in SRS-ResourceSet.

An SRS resource may be configured via a higher-layer parameter (such as SRS-Resource or SRS-PosResource), and the SRS resource may include the following.

1) $N^{\text{SRS}}_{\text{ap}} \in \{1,2,4,\dots\}$ SRS antenna ports. A port index of SRS antenna port $i$ ($i \in \{0,1,\dots,N^{\text{SRS}}_{\text{ap}}-1\}$) among $N^{\text{SRS}}_{\text{ap}}$ SRS antenna ports is represented as $\{p_i\}^{N^{\text{SRS}}_{\text{ap}}-1}_{i=0}$.

The maximum number (i.e., a value of $N^{\text{SRS}}_{\text{ap}}$) of SRS antenna ports in an SRS resource can be configured by a higher-layer parameter (e.g., nrofSRS-Ports). If the higher-layer parameter is not configured, $N^{\text{SRS}}_{\text{ap}} = 1$. In addition, in the case where an SRS resource is in an SRS resource set with a higher-layer parameter (e.g., usage) not set to 'nonCodebook', or in the case where the SRS resource is in an SRS resource set with a higher-layer parameter (e.g., usage) set to "nonCodebook", $p_i = 1000 + i$.

It may be noted that in embodiments of the disclosure, the value of $N^{\text{SRS}}_{\text{ap}}$ is equal to the value of L. That is, a higher-layer parameter (e.g., nrofSRS-Ports) configures that the maximum number of SRS antenna ports in an SRS resource is L, and a port index of SRS antenna port $i$ ($i \in \{0,1,\dots,L-1\}$) among the L SRS antenna ports is represented as $\{p_i\}^{N^{SRS}_{ap}-1}_{i=0}$, where $p_i = 1000 + i$.

In addition, the value of L may be 5, 6, 7, 8, etc., which is not specifically limited herein.

For example, if L=5, for 5 SRS antenna ports, a port index $p_0$ of SRS antenna port 0 is 1000, a port index $p_1$ of SRS antenna port 1 is 1001, a port index of SRS antenna port 2 is 1002, a port index of SRS antenna port 3 is 1003, and a port index of SRS antenna port 4 is 1004.

2) $N^{\text{SRS}}_{\text{symb}} \in \{1,2,4,8,12\}$ consecutive orthogonal frequency division multiplexing (OFDM) symbols. A value of $N^{\text{SRS}}_{\text{symb}}$ is configured by a higher-layer parameter.

For example, $N^{\text{SRS}}_{\text{symb}}$ is configured by a field nrofSymbols in resourceMapping.

3) Time-domain starting position $l_0$ of an SRS. $l_0 = N^{\text{SRS}}_{\text{symb}} - 1 - l_{\text{offset}}$, where offset $l_{\text{offset}} \in \{0,1,\dots,13\}$ represents the number of OFDM symbols after the end of a slot and is given by a higher-layer parameter, and $l_{\text{offset}} \geq N^{\text{SRS}}_{\text{symb}} - 1$.

For example, $l_0$ is configured by a field startPosition in resourceMapping.

4) Frequency-domain starting position $k_0$ of an SRS

4. Sequence generation of SRS resources, the value of $k_{\text{TC}}$, and the value of $n^{\text{cs}}_{\text{SRS}}$

For an SRS resource with OFDM symbol $l'$ and SRS antenna port $i$, an SRS sequence for the SRS resource is generated according to $r^{(p_i)}(n, l') = r_{u,v}^{(\alpha_i,\delta)}(n)$ , where $0 \le n \le M_{sc,b}^{SRS} - 1$, and $l' \in \{0, 1, \dots, N_{symb}^{SRS} - 1\}$ .

Meanings of parameters in the above formula are explained separately below.

1) Meaning of $M_{sc,b}^{SRS}$ $M_{sc,b}^{SRS}$ represents a length of an SRS sequence and can be defined by: $M_{sc,b}^{SRS} = m_{SRS,b} N_{sc}^{RB} / K_{TC}$. $N_{sc}^{RB}$ represents the number of subcarriers in 1 resource block (RB). $K_{TC}$ represents a transmission comb number and is configured by a higher-layer parameter, for example, $K_{TC}$ is configured by transmissionComb. $m_{SRS,b}$ represents the number of physical resource blocks (PRBs) for SRS transmission and is determined by higher-layer parameters $C_{SRS}$ and $B_{SRS}$ that are configured by higher-layer signaling. As illustrated in Table 1, $b = B_{SRS}$, $B_{SRS} \in \{0,1,2,3\}$ is given by a field b-SRS in a higher-layer parameter freqHopping, $C_{SRS} \in \{0,1, \dots ,63\}$ is given by a field c-SRS in the higher-layer parameter freqHopping, $b_{hop} \in \{0,1,2,3\}$ is given by a field b-hop in the higher-layer parameter freqHopping, and $m_{SRS,0}$ may represent the total bandwidth for SRS frequency hopping.

Table 1

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| ... | ... | ... | ... | ... | ... | ... | | ... |

It may be noted that in embodiments of the disclosure, $K_{TC}$ may draw a value within a new range besides {2,4,8} (i.e., $K_{TC} \in \{2,4,8\}$), which is not specifically limited herein.

For example, $K_{TC}$ draws a value within a range {2,4,8,12}.

2) Meaning of $r_{u,v}^{(\alpha,\delta)}(n)$ $r_{u,v}^{(\alpha,\delta)}(n)$ represents a low-peak-to-average power ratio (PAPR) pseudo-random sequence and can be defined by: $r_{u,v}^{(\alpha,\delta)}(n) = e^{j\alpha n} \bar{r}_{u,v}(n)$, where $0 \le n \le M_{ZC}$. $M_{ZC} = m N_{sc}^{RB} / 2^\delta$ represents a length of $r_{u,v}^{(\alpha,\delta)}(n)$, where $\alpha$ represents a cyclic shift, $\bar{r}_{u,v}(n)$ represents a base sequence, $u \in \{0,1, \dots ,29\}$ represents a group number, $v$ represents a base sequence number of $\bar{r}_{u,v}(n)$ in a group, and $\delta = \log_2(K_{TC})$.

3) Meaning of $\alpha_i$

$\alpha_i$ represents a cyclic shift for SRS antenna port $i$ ($p_i$) and can be defined by: $\alpha_i = 2\pi \frac{n_{SRS}^{cs,i}}{n_{SRS}^{cs,max}}$, where

$$n_{\text{SRS}}^{\text{cs},i} = \left(n_{\text{SRS}}^{\text{cs}} + \frac{n_{\text{SRS}}^{\text{cs,max}}(p_i - 1000)}{N_{\text{ap}}^{\text{SRS}}}\right) \bmod n_{\text{SRS}}^{\text{cs,max}} . \ n_{\text{SRS}}^{\text{cs}} \in \left\{0, 1, \dots, n_{\text{SRS}}^{\text{cs,max}} - 1\right\}$$

represents the number of cyclic shifts and is configured by a higher-layer parameter, for example, $n_{\text{SRS}}^{\text{cs}}$ is configured by transmissionComb. $n_{\text{SRS}}^{\text{cs,max}}$ represents the maximum number of cyclic shifts, and the value of $n_{\text{SRS}}^{\text{cs,max}}$ can be determined according to the value of $K_{\text{TC}}$.

For example, when $K_{\text{TC}}$ draws a value within a range {2,4,8}, the value of $n_{\text{SRS}}^{\text{cs,max}}$ is given by Table 2.

Table 2

| $K_{\text{TC}}$ | $n_{\text{SRS}}^{\text{cs,max}}$ |
|---|---|
| 2 | 8 |
| 4 | 12 |
| 8 | 6 |

For example, when $K_{\text{TC}}$ draws a value within a range {2,4,8,12}, the value of $n_{\text{SRS}}^{\text{cs,max}}$ is given by Table 3.

Table 3

| $K_{\text{TC}}$ | $n_{\text{SRS}}^{\text{cs,max}}$ |
|---|---|
| 2 | 8 |
| 4 | 12 |
| 8 | 6 |
| 12 | 4 |

It may be noted that $K_{\text{TC}}$ may indicate the number of SRS antenna ports having a possibility of frequency domain orthogonality, and $n_{\text{SRS}}^{\text{cs,max}}$ may indicate the number of SRS antenna ports having a possibility of code division orthogonality in a code domain. Since orthogonality needs to be ensured between different SRS antenna ports or different terminal devices, $K_{\text{TC}} * n_{\text{SRS}}^{\text{cs,max}}$ (e.g., $K_{\text{TC}} * n_{\text{SRS}}^{\text{cs,max}} = 8 * 6 = 48$) indicates the number of orthogonalities that can be accommodated in total.

Exemplarily, the parameter transmissionComb in NR R16 contains the following information.

```
                      transmissionComb-r16                CHOICE {

              n2-r16                        SEQUENCE {
                 combOffset-n2-r16                INTEGER (0..1),
                 cyclicShift-n2-r16               INTEGER (0..7)
              },
              n4-r16                        SEQUENCE {
                 combOffset-n4-16                 INTEGER (0..3),
                 cyclicShift-n4-r16               INTEGER (0..11)
              },
              n8-r16                        SEQUENCE {
                 combOffset-n8-r16                INTEGER (0..7),
                 cyclicShift-n8-r16               INTEGER (0..5)
              },
                        ...
              }
```

n2-r16 is used to configure that $K_{\text{TC}} = 2$, combOffset-n2-r16 is used to configure the value of $\overline{k}_{\text{TC}}$, and cyclicShift-n2-r16 is used to configure the value of $n_{\text{SRS}}^{\text{cs}}$. Similarly, functions of the rest of the above information can be seen.

4. SRS resource mapping and first transmission comb offset

In the case where SRS transmission is to be performed on a given SRS resource, for an SRS resource with OFDM symbol $l'$ and SRS antenna port $i$, it needs to multiply an SRS sequence $r^{(p_i)}(n, l') = r_{u,v}^{(\alpha_i, \delta)}(n)$ for the SRS resource by an amplitude scaling factor $\beta_{\text{SRS}}$ to meet transmit power.

In embodiments of the disclosure, since the maximum number of SRS antenna ports in the SRS resource may exceed 4, i.e., L > 4, SRS resource mapping modes may be different for different values of L. The following introduces an SRS resource mapping mode if L=4, and then an SRS resource mapping mode if L>4 is specifically introduced based on the introduction of the SRS resource mapping mode if L=4.

Scenario 1: L=4 (i.e., $N_{\text{ap}}^{\text{SRS}} = 4$)

If $N_{\text{ap}}^{\text{SRS}} = 4$, an SRS sequence corresponding to SRS antenna port $i$ ($i \in \{0,1,2,3\}$) is mapped, in an order starting from $r^{(p_i)}(0, l')$, to a resource element $(k,l)$ in a certain slot according to

$$a_{K_{\text{TC}}k' + k_0^{(p_i)}, l' + l_0}^{(p_i)} = \begin{cases} \frac{1}{\sqrt{N_{\text{ap}}}} \beta_{\text{SRS}} r^{(p_i)}(k', l'), & k' = 0, 1, \ldots, M_{\text{sc,b}}^{\text{SRS}} - 1, l' = 0, 1, \ldots, N_{\text{symb}}^{\text{SRS}} - 1 \\ 0, & \text{otherwise} \end{cases}$$

Meanings of parameters in the above formula are explained separately below.

1. Meaning of $l'$

It may be noted that since $l' = 0, 1, \ldots, N_{\text{symb}}^{\text{SRS}} - 1$, it indicates that each OFDM symbol among $N_{\text{symb}}^{\text{SRS}}$

OFDM symbols in an SRS resource is required to be used to transmit/map/carry L ( $N_{\mathrm{ap}}^{\mathrm{SRS}}$ ) SRS antenna ports.

That is, among the $N_{\mathrm{symb}}^{\mathrm{SRS}}$ OFDM symbols, each OFDM symbol serves as a unit to obtain $N_{\mathrm{symb}}^{\mathrm{SRS}}$ units, the L ( $N_{\mathrm{ap}}^{\mathrm{SRS}}$ ) SRS antenna ports are transmitted/mapped/carried by means of one of the $N_{\mathrm{symb}}^{\mathrm{SRS}}/2$ units, and repetition or frequency hopping can be performed among the $N_{\mathrm{symb}}^{\mathrm{SRS}}$ units.

In other words, the L ( $N_{\mathrm{ap}}^{\mathrm{SRS}}$ ) SRS antenna ports are mapped to the same OFDM symbol.

For example, if L = 4 and $N_{\mathrm{symb}}^{\mathrm{SRS}} = 2$ , a first OFDM symbol in the 2 OFDM symbols is used to transmit/map/carry 4 SRS antenna ports, and a second OFDM symbol in the 2 OFDM symbols is used to transmit/map/carry the 4 SRS antenna ports. In other words, the 4 SRS antenna ports are mapped to the first OFDM symbol, and the 4 SRS antenna ports are mapped to the second OFDM symbol.

2. Meaning of $k_0^{(p_i)}$ $k_0^{(p_i)}$ represents a frequency-domain starting position corresponding to SRS antenna port $i$ ($p_i$) and can be defined by: $k_0^{(p_i)} = \overline{k}_0^{(p_i)} + \sum_{b=0}^{B_{\mathrm{SRS}}} K_{\mathrm{TC}} M_{\mathrm{sc},b}^{\mathrm{SRS}} n_b$ , where $\overline{k}_0^{(p_i)}$ can be defined by:

$$\overline{k}_0^{(p_i)} = n_{\mathrm{shift}} N_{\mathrm{sc}}^{\mathrm{RB}} + \left( k_{\mathrm{TC}}^{(p_i)} + k_{\mathrm{offset}}^{l'} \right) \mathrm{mod}\, K_{\mathrm{TC}}$$ .

1) Meaning of $k_{\mathrm{TC}}^{(p_i)}$ $k_{\mathrm{TC}}^{(p_i)}$ represents a transmission comb offset corresponding to SRS antenna port $i$, i.e., a "first transmission comb offset" in embodiments of the disclosure, and $k_{\mathrm{TC}}^{(p_i)}$ can be defined by: $k_{\mathrm{TC}}^{(p_i)} =$

$$\begin{cases} \left( \overline{k}_{\mathrm{TC}} + K_{\mathrm{TC}}/2 \right) \mathrm{mod}\, K_{\mathrm{TC}}, n_{\mathrm{SRS}}^{\mathrm{cs}} \in \left\{ n_{\mathrm{SRS}}^{\mathrm{cs,max}}/2, \dots, n_{\mathrm{SRS}}^{\mathrm{cs,max}} - 1 \right\} \text{ and } N_{\mathrm{ap}}^{\mathrm{SRS}} = 4 \text{ and } p_i \in \{1001,1003\} \\ \overline{k}_{\mathrm{TC}}, \text{otherwise} \end{cases}$$

, where $\overline{k}_{\mathrm{TC}} \in \{0,1, \dots, K_{\mathrm{TC}} - 1\}$ represents a transmission comb offset, i.e., a "second transmission comb offset" in embodiments of the disclosure, and $\overline{k}_{\mathrm{TC}}$ is configured by a higher-layer parameter. For example, $\overline{k}_{\mathrm{TC}}$ is configured by a parameter transmissionComb in SRS-Resource or SRS-PosResource.
The following may be seen from the formula above if L = 4.

① If $n_{\mathrm{SRS}}^{\mathrm{cs}} \in \left\{ n_{\mathrm{SRS}}^{\mathrm{cs,max}}/2, \dots, n_{\mathrm{SRS}}^{\mathrm{cs,max}} - 1 \right\}$, among the 4 SRS ports, transmission comb offset ( $k_{\mathrm{TC}}^{(p_1)}$ ) corresponding to SRS port 1 (i.e., $p_1$ = 1001) is equal to transmission comb offset ( $k_{\mathrm{TC}}^{(p_3)}$ ) corresponding to SRS port 3 (i.e., $p_1$ = 1003), i.e., $k_{\mathrm{TC}}^{(p_1)} = k_{\mathrm{TC}}^{(p_3)} = \left( \overline{k}_{\mathrm{TC}} + K_{\mathrm{TC}}/2 \right) \mathrm{mod}\, K_{\mathrm{TC}}$.

That is, if $n_{\mathrm{SRS}}^{\mathrm{cs}} \in \left\{ n_{\mathrm{SRS}}^{\mathrm{cs,max}}/2, \dots, n_{\mathrm{SRS}}^{\mathrm{cs,max}} - 1 \right\}$, among the 4 SRS ports, first transmission comb offsets respectively corresponding to SRS antenna ports each with an odd port index are equal.

(2) Among the 4 SRS ports, transmission comb offset ( $k_{\mathrm{TC}}^{(p_0)}$ ) corresponding to SRS port 0 (i.e., $p_1$ = 1000) is equal to transmission comb offset ( $k_{\mathrm{TC}}^{(p_2)}$ ) corresponding to SRS port 2 (i.e., $p_2$ = 1002), i.e., $k_{\mathrm{TC}}^{(p_0)} = k_{\mathrm{TC}}^{(p_2)} = \overline{k}_{\mathrm{TC}}$ .
That is, among the 4 SRS antenna ports, first transmission comb offsets respectively corresponding to SRS antenna ports each with an even port index are equal.

③ If $n_{\mathrm{SRS}}^{\mathrm{cs}} \notin \left\{ n_{\mathrm{SRS}}^{\mathrm{cs,max}}/2, \dots, n_{\mathrm{SRS}}^{\mathrm{cs,max}} - 1 \right\}$, among 1/2/4 SRS antenna ports (since the value of L represents the maximum number of SRS antenna ports in the SRS resource, 1/2/4 SRS antenna ports may actually exist), transmission comb offsets respectively corresponding to all SRS ports are equal, i.e., $k_{\mathrm{TC}}^{(p_0)} = k_{\mathrm{TC}}^{(p_1)} = k_{\mathrm{TC}}^{(p_2)} = k_{\mathrm{TC}}^{(p_3)} = \overline{k}_{TC}$ .

3. Meaning of $n_{\mathrm{shift}}$

$n_{\mathrm{shift}}$ represents a frequency domain shift value. $n_{\mathrm{shift}}$ is used to adjust SRS allocation relative to a reference point grid and is configured by a higher-layer parameter. For example, $n_{\mathrm{shift}}$ is configured by a parameter freqDomainShift in SRS-Resource or SRS-PosResource.

In the case where starting position $n_{\mathrm{BWP}}^{\mathrm{start}}$ of a bandwidth part (BWP) satisfies: $n_{\mathrm{BWP}}^{\mathrm{start}} \le n_{\mathrm{shift}}$ , subcarrier 0 in common resource block 0 serves as a reference point, i.e., point A serves as a reference point; otherwise, the smallest subcarrier in the BWP serves as a reference point.

4. Meaning of $k_{\mathrm{offset}}^{l'}$

If an SRS is configured by a higher-layer parameter SRS-PosResource, quantity $k_{\mathrm{offset}}^{l'}$ is determined by $K_{\mathrm{TC}}$ and $N_{\mathrm{symb}}^{\mathrm{SRS}}$ ; otherwise, $k_{\mathrm{offset}}^{l'}=0$ .

For example, when $K_{\mathrm{TC}}$ draws a value within a range {2,4,8}, $k_{\mathrm{offset}}^{l'}$ is given by Table 4.

Table 4

| $K_{\mathrm{TC}}$ | $k_{\mathrm{offset}}^{0},...,k_{\mathrm{offset}}^{N_{\mathrm{symb}}^{\mathrm{SRS}}-1}$ | | | |
| --- | --- | --- | --- | --- |
| | $N_{\mathrm{symb}}^{\mathrm{SRS}}=1$ | $N_{\mathrm{symb}}^{\mathrm{SRS}}=2$ | $N_{\mathrm{symb}}^{\mathrm{SRS}}=4$ | $N_{\mathrm{symb}}^{\mathrm{SRS}}=12$ |
| 2 | 0 | 0, 1 | 0, 1, 0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

5. Meaning of $n_b$

$n_b$ represents a frequency domain index.

It may be noted that it is supported that frequency hopping is performed during SRS transmission in the 5G NR communication system. If $b_{hop} < B_{SRS}$ is satisfied, SRS frequency hopping transmission is enabled and the terminal device performs SRS transmission in the form of frequency hopping. If $b_{hop} \ge B_{SRS}$ is satisfied, SRS frequency hopping transmission is disabled and the terminal device performs SRS transmission not in the form of frequency hopping.

① If $b_{hop} < B_{SRS}$, SRS frequency hopping is enabled, and $n_b$ can be defined by:

$$n_b = \begin{cases} \lfloor 4n_{\mathrm{RRC}}/m_{\mathrm{SRS,b}} \rfloor \bmod N_b, b \le b_{\mathrm{hop}} \\ \{F_b(n_{\mathrm{SRS}}) + \lfloor 4n_{\mathrm{RRC}}/m_{\mathrm{SRS,b}} \rfloor \} \bmod N_b, \text{otherwise} \end{cases}$$

$m_{SRS,b}$ and $N_b$ are determined by Table 1. $n_{\mathrm{RRC}}$ represents quantity and may be configured by a higher-layer parameter (e.g., freqDomainPosition). If $n_{\mathrm{RRC}}$ is not configured by a higher-layer parameter, $n_{\mathrm{RRC}} = 0$. The operator $\lfloor \cdot \rfloor$ represents downward rounding.

$F_b(n_{SRS})$ is determined by $F_b(n_{SRS}) =$

$$\begin{cases} (N_b/2) \left\lfloor \dfrac{n_{\mathrm{SRS}} \bmod \prod_{b'=b_{\mathrm{hop}}}^{b} N_{b'}}{\prod_{b'=b_{\mathrm{hop}}}^{b-1} N_{b'}} \right\rfloor + \left\lfloor \dfrac{n_{\mathrm{SRS}} \bmod \prod_{b'=b_{\mathrm{hop}}}^{b} N_{b'}}{2\prod_{b'=b_{\mathrm{hop}}}^{b-1} N_{b'}} \right\rfloor, \text{if } N_b \text{ is an even number} \\ (N_b/2) \left\lfloor n_{\mathrm{SRS}}/\prod_{b'=b_{\mathrm{hop}}}^{b-1} N_{b'} \right\rfloor, \text{if } N_b \text{ is an odd number} \end{cases}$$

$N_{b_{\mathrm{hop}}} = 1$ regard-

less of a value drawn by $N_b$. $n_{SRS}$ represents the number of times of SRS frequency hopping (SRS transmission).

For an aperiodic SRS, the number of times of SRS frequency hopping is determined by $n_{SRS} = \lfloor l'/R \rfloor$, where $l' \in \{0, 1, \ldots, N_{symb}^{SRS}\} - 1$. $R$ represents repetitionFactor and is configured by higher-layer signaling. R indicates the number of repetition OFDM symbols for SRS frequency hopping. For example, if $R=1$, frequency hopping is performed in a unit of 1 OFDM symbol; and if $R=2$, frequency hopping is performed in a unit of 2 OFDM symbols.

For a periodic SRS or a semi-periodic SRS, the number of times of SRS frequency hopping is determined by

$$n_{SRS} = \left( \frac{N_{slot}^{frame,\mu} n_f + n_{s,f}^{\mu} - T_{offset}}{T_{offset}} \right) \cdot \left( \frac{N_{symb}^{SRS}}{R} \right) + \left\lfloor \frac{l'}{R} \right\rfloor . \ N_{slot}^{frame,\mu}$$

represents the number of slots per radio frame when a subcarrier is configured as $\mu$, $n_f$ represents a system frame number (SFN), $N_{s,f}^{\mu}$ represents a slot index in a radio frame when a subcarrier is configured as $\mu$, $T_{offset}$ represents a slot offset configured via RRC signaling, and $T_{SRS}$ represents a period configured via RRC signaling. $N_{slot}^{frame,\mu}$ is determined by Table 5.

Table 5

| $\mu$ | $\Delta f = 2^{\mu} \cdot 14$[kHz] | $N_{symb}^{slot}$ | $N_{slot}^{frame,\mu}$ | $N_{slot}^{subframe,\mu}$ | $T_{slot}$[ms] | cyclic prefix |
|---|---|---|---|---|---|---|
| 0 | 15 | 14 | 10 | 1 | 1 | normal |
| 1 | 30 | 14 | 20 | 2 | 0.5 | normal |
| 2 | 60 | 14 | 40 | 4 | 0.25 | normal |
| 3 | 120 | 14 | 80 | 8 | 0.125 | normal |
| 4 | 240 | 14 | 160 | 16 | 0.0625 | normal |

In Table 5, $\Delta f$ represents a subcarrier spacing, $N_{symb}^{slot}$ represents the number of OFDM symbols per slot, $N_{slot}^{subframe,\mu}$ represents the number of slots per subframe, and $T_{slot}$ represents a slot length.

② If $b_{hop} \geq B_{SRS}$ SRS frequency hopping is disabled, and $n_b$ can be defined by: $n_b = \lfloor 4n_{RRC}/m_{SRS,b} \rfloor \bmod N_b$, where $m_{SRS,b}$ and $N_b$ are determined by Table 1. $n_{RRC}$ represents quantity and may be configured by a higher-layer parameter (e.g., freqDomainPosition). If $n_{RRC}$ is not configured by a higher-layer parameter, $n_{RRC} = 0$.

Scenario 2: L>4 (i.e., $N_{ap}^{SRS} > 4$)

If $N_{ap}^{SRS} > 4$, an SRS sequence corresponding to SRS antenna port $i$ ($i \in \{0,1,2,3\}$) is mapped, in an order starting from $r^{(p_i)}(0, l')$, to a resource element $(k,l)$ in a certain slot according to

$$a_{K_{TC}k'+k_0^{(p_i)},l^{(p_i)}+l_0}^{(p_i)} = \begin{cases} \frac{1}{\sqrt{N_{ap}}} \beta_{SRS} r^{(p_i)}(k', l^{(p_i)}) \\ 0, \text{otherwise} \end{cases}, \text{ where } k' = 0, 1, \ldots M_{sc,b}^{SRS} - 1.$$

Meanings of parameters in the above formula are explained separately below.

1. Meaning of $l^{(p_i)}$

$l^{(p_i)}$ may satisfy the following formulas.

1) $l^{(p_i)} = l'$, and $l' = 0, 1, \ldots, N_{symb}^{SRS} - 1$.

It may be noted that, consistent with scenario 1 above, since $l^{(p_i)} = 0, 1, \ldots, N_{\text{symb}}^{\text{SRS}} - 1$, it indicates that each OFDM symbol among $N_{\text{symb}}^{\text{SRS}}$ OFDM symbols in an SRS resource is required to be used to transmit/map/carry L ( $N_{\text{ap}}^{\text{SRS}}$ ) SRS antenna ports.

That is, among the $N_{\text{symb}}^{\text{SRS}}$ OFDM symbols, each OFDM symbol serves as a unit to obtain $N_{\text{symb}}^{\text{SRS}}$ units, the L ( $N_{\text{ap}}^{\text{SRS}}$ ) SRS antenna ports are transmitted/mapped/carried by means of one of the $N_{\text{symb}}^{\text{SRS}}/2$ units, and repetition or frequency hopping can be performed among the $N_{\text{symb}}^{\text{SRS}}$ units.

In other words, the L ( $N_{\text{ap}}^{\text{SRS}}$ ) SRS antenna ports are mapped to the same OFDM symbol.

For example, if L = 6 and $N_{\text{symb}}^{\text{SRS}} = 2$, a first OFDM symbol in the 2 OFDM symbols is used to transmit/map/carry 6 SRS antenna ports, and a second OFDM symbol in the 2 OFDM symbols is used to transmit/map/carry the 6 SRS antenna ports. In other words, the 6 SRS antenna ports are mapped to the first OFDM symbol, and the 6 SRS antenna ports are mapped to the second OFDM symbol.

2) $l^{(p_i)}$ = {$l'$mod2 = 0}, and $l' = 0, 1, \ldots, N_{\text{symb}}^{\text{SRS}} - 1$.

It may be noted that unlike $l' = 0, 1, \ldots, N_{\text{symb}}^{\text{SRS}} - 1$ in scenario 1 where "L = 4", i.e., one OFDM symbol serves as a unit to be used to transmit/map/carry L ( $N_{\text{ap}}^{\text{SRS}}$ ) SRS antenna ports, in this case, since $l^{(p_i)}$ = {$l'$mod2 = 0}, i.e., $l^{(p_i)}$ = 0,2,4..., it indicates that two consecutive (adjacent) OFDM symbols among $N_{\text{symb}}^{\text{SRS}}$ OFDM symbols in an SRS resource are sequentially required to be used to transmit/map/carry the L ( $N_{\text{ap}}^{\text{SRS}}$ ) SRS antenna ports.

That is, among the $N_{\text{symb}}^{\text{SRS}}$ OFDM symbols, two consecutive (adjacent) OFDM symbols sequentially serve as a unit to obtain $N_{\text{symb}}^{\text{SRS}}/2$ units, the L ( $N_{\text{ap}}^{\text{SRS}}$ ) SRS antenna ports are transmitted/mapped/carried by means of one of the $N_{\text{symb}}^{\text{SRS}}/2$ units, and repetition or frequency hopping can be performed among the $N_{\text{symb}}^{\text{SRS}}/2$ units. Alternatively, the L ( $N_{\text{ap}}^{\text{SRS}}$ ) SRS antenna ports are respectively mapped to any one of two OFDM symbols in a unit.

① How to select two consecutive (adjacent) OFDM symbols to serve as a unit

Two consecutive (adjacent) OFDM symbols may serve as a unit in the following manner. A first OFDM symbol ($l'$ = 0) and a second OFDM symbol ($l'$ = 1) serve as a unit, a third OFDM symbol ($l'$ = 2) and a fourth OFDM symbol ($l'$ = 3) serve as a unit, and so on.

Since $l^{(p_i)}$ = {$l'$mod2 = 0}, SRS antenna port i ( $p_i$) may be mapped to the first OFDM symbol ($l'$ = 0), the third OFDM symbol ($l'$ = 2), a fifth OFDM symbol ($l'$ = 4), and so on, respectively.

For example, $l^{(p_i)}$ = 0,2 if $N_{\text{symb}}^{\text{SRS}} = 4$, which indicates that SRS antenna port i ( $p_i$) may be mapped to the first OFDM symbol ($l^{(p_i)}$ = 0) among the 4 OFDM symbols, and SRS antenna port i ( $p_i$) may be mapped to the third OFDM symbol ($l^{(p_i)}$ = 2) among the 4 OFDM symbols.

② How to determine which of the L ( $N_{\text{ap}}^{\text{SRS}}$ ) SRS antenna ports are mapped to a same OFDM symbol of two OFDM symbols in a unit.

It may be noted that in embodiments of the disclosure, two OFDM symbols in a unit are respectively regarded as a "first OFDM symbol" and a "second OFDM symbol". Therefore, how to determine which of the L ( $N_{\text{ap}}^{\text{SRS}}$ ) SRS antenna ports are mapped to a same OFDM symbol may be performed in the following manners.

Among the L ( $N_{\text{ap}}^{\text{SRS}}$ ) SRS antenna ports, SRS antenna ports each with a port index belonging to first S (S < L) port indexes are mapped to a same first OFDM symbol, and except the SRS antenna ports each with a port index belonging to the first S port indexes, SRS antenna ports each with a port index belonging to the remaining port indexes are mapped to a same second OFDM symbol.

Among the L ( $N_{\text{ap}}^{\text{SRS}}$ ) SRS antenna ports, SRS antenna ports each with an odd port index are mapped to the same first OFDM symbol, and SRS antenna ports each with an even port index are mapped to the same second OFDM symbol.

It may be noted that the value of S is any one positive integer less than L. For example, the value of S may be L/2.

In addition, the value of S may be configured by a network or pre-configured, or may be determined autonomously by the terminal device, which is not specifically limited herein.

3) $l^{(p_i)} = \{l'\text{mod}2 = 1\}$, and $l' = 0,1,\ldots,N_{\text{symb}}^{\text{SRS}} - 1$.

It may be to be noted that, similar to the above, since $l^{(p_i)} = \{l'\text{mod}2 = 1\}$, i.e., $l^{(p_i)} = 1,3,5\ldots$, it indicates that two consecutive (adjacent) OFDM symbols among $N_{\text{symb}}^{\text{SRS}}$ OFDM symbols in an SRS resource are sequentially required to be used to transmit/map/carry the L ( $N_{\text{ap}}^{\text{SRS}}$ ) SRS antenna ports.

That is, among the $N_{\text{symb}}^{\text{SRS}}$ OFDM symbols, two consecutive (adjacent) OFDM

symbols sequentially serve as a unit to obtain $N_{\text{symb}}^{\text{SRS}}/2$ units, the L ( $N_{\text{ap}}^{\text{SRS}}$ ) SRS antenna ports are transmitted/mapped/carried by means of one of the $N_{\text{symb}}^{\text{SRS}}/2$ units, and repetition or frequency hopping can be performed among the $N_{\text{symb}}^{\text{SRS}}/2$ units.

Alternatively, the L ( $N_{\text{ap}}^{\text{SRS}}$ ) SRS antenna ports are respectively mapped to any one of two OFDM symbols in a unit.

① How to select two consecutive (adjacent) OFDM symbols to serve as a unit

Two consecutive (adjacent) OFDM symbols may serve as a unit in the following manner. A first OFDM symbol (*l'* = 0) and a second OFDM symbol (*l'* = 1) serve as a unit, a third OFDM symbol (*l'* = 2) and a fourth OFDM symbol (*l'* = 3) serve as a unit, and so on.

In this case, since $l^{(p_i)} = \{l'\text{mod}2 = 1\}$, SRS antenna port *i* ( $p_i$ ) may be mapped to the second OFDM symbol (*l'* = 1), the fourth OFDM symbol (*l'* = 3), a sixth OFDM symbol (*l'* = 5), and so on, respectively.

For example, $l^{(p_i)} = 1,3$ if $N_{\text{symb}}^{\text{SRS}} = 4$, which indicates that SRS antenna port *i* ( $p_i$ ) may be mapped to the second OFDM symbol ($l^{(p_i)} = 1$) among the 4 OFDM symbols, and SRS antenna port *i* ( $p_i$ ) may be mapped to the fourth OFDM symbol ($l^{(p_i)} = 3$) among the 4 OFDM symbols.

② How to determine which of the L ( $N_{\text{ap}}^{\text{SRS}}$ ) SRS antenna ports are mapped to a same OFDM symbol of the two OFDM symbols in a unit.

It may be noted that how to determine which of the L ( $N_{\text{ap}}^{\text{SRS}}$ ) SRS antenna ports are mapped to a same OFDM symbol may be performed in manners same as the above manners.

Among the L ( $N_{\text{ap}}^{\text{SRS}}$ ) SRS antenna ports, SRS antenna ports each with a port index belonging to first S (S < L) port indexes are mapped to a same first OFDM symbol, and except the SRS antenna ports each with a port index belonging to the first S port indexes, SRS antenna ports each with a port index belonging to the remaining port indexes are mapped to a same second OFDM symbol.

Among the L ( $N_{\text{ap}}^{\text{SRS}}$ ) SRS antenna ports, SRS antenna ports each with an odd port index are mapped to the same first OFDM symbol, and SRS antenna ports each with an even port index are mapped to the same second OFDM symbol.

4) $l^{(p_i)} = 0, 1, \ldots, N_{\mathrm{symb}}^{\mathrm{SRS}}/2 - 1$

It may be noted that, similar to the above, since $l^{(p_i)} = 0, 1, \ldots, N_{\mathrm{symb}}^{\mathrm{SRS}}/2 - 1$, it indicates that two non-consecutive (non-adjacent) OFDM symbols among $N_{\mathrm{symb}}^{\mathrm{SRS}}$ OFDM symbols in an SRS resource are sequentially required to be used to transmit/map/carry the L ( $N_{\mathrm{ap}}^{\mathrm{SRS}}$ ) SRS antenna ports.

That is, among the $N_{\mathrm{symb}}^{\mathrm{SRS}}$ OFDM symbols, two non-consecutive (non-adjacent) OFDM symbols sequentially serve as a unit to obtain $N_{\mathrm{symb}}^{\mathrm{SRS}}/2$ units, the L ( $N_{\mathrm{ap}}^{\mathrm{SRS}}$ ) SRS antenna ports are transmitted/mapped/carried by means of one of the $N_{\mathrm{symb}}^{\mathrm{SRS}}/2$ units, and repetition or frequency hopping can be performed among the $N_{\mathrm{symb}}^{\mathrm{SRS}}/2$ units. Alternatively, the L ( $N_{\mathrm{ap}}^{\mathrm{SRS}}$ ) SRS antenna ports are respectively mapped to any one of two OFDM symbols in a unit.

① How to select two non-consecutive (non-adjacent) OFDM symbols to serve as a unit

Two non-consecutive (non-adjacent) OFDM symbols may serve as a unit in the following manner. A first OFDM symbol (*l'* = 0) and a ( $N_{\mathrm{symb}}^{\mathrm{SRS}}/2 + 1$ ) OFDM symbol (*l'* = $N_{\mathrm{symb}}^{\mathrm{SRS}}/2$ ) serve as a unit, a second OFDM symbol (*l'* = 1) and a fourth OFDM symbol (*l'* = ( $N_{\mathrm{symb}}^{\mathrm{SRS}}/2 + 1$ ) serve as a unit, and so on.

In this case, since $l^{(p_i)} = 0, 1, \ldots, N_{\mathrm{symb}}^{\mathrm{SRS}}/2 - 1$, SRS antenna port *i* ( $p_i$ ) may be mapped to the first OFDM symbol ($l^{(p_i)}$ = 0), the second OFDM symbol ($l^{(p_i)}$ = 1), the third OFDM symbol ($l^{(p_i)}$ = 2), and so on, respectively.

For example, $l^{(p_i)}$ = 0,1 if $N_{\mathrm{symb}}^{\mathrm{SRS}} = 4$, which indicates that SRS antenna port *i* ( $p_i$ ) may be mapped to the first OFDM symbol ($l^{(p_i)}$ = 0) among the 4 OFDM symbols, and SRS antenna port *i* ( $p_i$ ) may be mapped to the second OFDM symbol ($l^{(p_i)}$ = 1) among the 4 OFDM symbols.

② How to determine which of the L ( $N_{\mathrm{ap}}^{\mathrm{SRS}}$ ) SRS antenna ports are mapped to a same OFDM symbol of the two OFDM symbols in a unit.

It may be noted that how to determine which of the L ( $N_{\mathrm{ap}}^{\mathrm{SRS}}$ ) SRS antenna ports are mapped to a same OFDM symbol may be performed in manners same as the above manners.

Among the L ( $N_{\mathrm{ap}}^{\mathrm{SRS}}$ ) SRS antenna ports, SRS antenna ports each with a port index belonging to first S (S < L) port indexes are mapped to a same first OFDM symbol, and except the SRS antenna ports each with a port index belonging to the first S port indexes, SRS antenna ports each with a port index belonging to the remaining port indexes are mapped to a same second OFDM symbol.

Among the L ( $N_{\mathrm{ap}}^{\mathrm{SRS}}$ ) SRS antenna ports, SRS antenna ports each with an odd port index are mapped to the same first OFDM symbol, and SRS antenna ports each with an even port index are mapped to the same second OFDM symbol.

5) $l^{(p_i)} = N_{\mathrm{symb}}^{\mathrm{SRS}}/2, \ldots, N_{\mathrm{symb}}^{\mathrm{SRS}} - 1$

It may be noted that, similar to the above, since $l^{(p_i)} = N_{\mathrm{symb}}^{\mathrm{SRS}}/2, \ldots, N_{\mathrm{symb}}^{\mathrm{SRS}} - 1$, it indicates that two non-consecutive (non-adjacent) OFDM symbols among $N_{\mathrm{symb}}^{\mathrm{SRS}}$ OFDM symbols in an SRS resource are sequentially required to be used to transmit/map/carry the L ( $N_{\mathrm{ap}}^{\mathrm{SRS}}$ ) SRS antenna ports.

That is, among the $N_{\mathrm{symb}}^{\mathrm{SRS}}$ OFDM symbols, two non-consecutive (non-adjacent) OFDM symbols sequentially serve as a unit to obtain $N_{\text{symb}}^{\text{SRS}}/2$ units, the L ( $N_{\text{ap}}^{\text{SRS}}$ ) SRS antenna ports are transmitted/mapped/carried by means of one of the $N_{\text{symb}}^{\text{SRS}}/2$ units, and repetition or frequency hopping can be performed among the $N_{\text{symb}}^{\text{SRS}}/2$ units. Alternatively, the L ( $N_{\text{ap}}^{\text{SRS}}$ ) SRS antenna ports are respectively mapped to any one of two OFDM symbols in a unit.

① How to select two non-consecutive (non-adjacent) OFDM symbols to serve as a unit

Two non-consecutive (non-adjacent) OFDM symbols may serve as a unit in the following manner. A first OFDM symbol (*l'* = 0) and a ( $N_{\text{symb}}^{\text{SRS}}/2 + 1$ ) OFDM symbol (*l'* = $N_{\text{symb}}^{\text{SRS}}/2$ ) serve as a unit, a second OFDM symbol (*l'* = 1) and a fourth OFDM symbol (*l'* = $(N_{\text{symb}}^{\text{SRS}}/2 + 1)$ serve as a unit, and so on.

In this case, since $l^{(p_i)} = N_{\text{symb}}^{\text{SRS}}/2, \dots, N_{\text{symb}}^{\text{SRS}} - 1$ , SRS antenna port *i* ( $p_i$ ) may be mapped to the first OFDM symbol ($l^{(pi)}$ = 0), the second OFDM symbol ($l^{(p_i)}$ = 1), the third OFDM symbol ($l^{(p_i)}$ = 2), and so on, respectively.

For example, $l^{(p_i)}$ = 2,3 if $N_{\text{symb}}^{\text{SRS}} = 4$ , which indicates that SRS antenna port *i* ( $p_i$ ) may be mapped to the third OFDM symbol ($l^{(p_i)}$ = 2) among the 4 OFDM symbols, and SRS antenna port *i* ( $p_i$ ) may be mapped to the fourth OFDM symbol ($l^{(p_i)}$ = 3) among the 4 OFDM symbols.

② How to determine which of the L ( $N_{\text{ap}}^{\text{SRS}}$ ) SRS antenna ports are mapped to a same OFDM symbol of the two OFDM symbols in a unit.

It may be noted that how to determine which of the L ( $N_{\text{ap}}^{\text{SRS}}$ ) SRS antenna ports are mapped to a same OFDM symbol may be performed in manners same as the above manners.

Among the L ( $N_{\text{ap}}^{\text{SRS}}$ ) SRS antenna ports, SRS antenna ports each with a port index belonging to first S (S < L) port indexes are mapped to a same first OFDM symbol, and except the SRS antenna ports each with a port index belonging to the first S port indexes, SRS antenna ports each with a port index belonging to the remaining port indexes are mapped to a same second OFDM symbol.

Among the L ( $N_{\text{ap}}^{\text{SRS}}$ ) SRS antenna ports, SRS antenna ports each with an odd port index are mapped to the same first OFDM symbol, and SRS antenna ports each with an even port index are mapped to the same second OFDM symbol.

6) $l^{(p_i)}$ draws a value from any $N_{\text{symb}}^{\text{SRS}}/2$ elements in $\{0, 1, \dots, N_{\text{symb}}^{\text{SRS}} - 1\}$ .

It may be noted that, similar to the above, since $l^{(p_i)}$ draws a value from any $N_{\text{symb}}^{\text{SRS}}/2$ elements in $\{0, 1, \dots, N_{\text{symb}}^{\text{SRS}} - 1\}$ , it indicates that two consecutive/adjacent/non-consecutive/non-adjacent OFDM symbols among $N_{\text{symb}}^{\text{SRS}}$ OFDM symbols in an SRS resource are sequentially required to be used to transmit/map/carry the L ( $N_{\text{ap}}^{\text{SRS}}$ ) SRS antenna ports.

That is, among the $N_{\text{symb}}^{\text{SRS}}$ OFDM symbols, two consecutive/adjacent/non-consecutive/non-adjacent OFDM symbols sequentially serve as a unit to obtain $N_{\text{symb}}^{\text{SRS}}/2$ units, the L ( $N_{\text{ap}}^{\text{SRS}}$ ) SRS antenna ports are transmitted/mapped/carried by means of one of the $N_{\text{symb}}^{\text{SRS}}/2$ units, and repetition or frequency hopping can be performed among the $N_{\text{symb}}^{\text{SRS}}/2$ units. Alternatively, the L ( $N_{\text{ap}}^{\text{SRS}}$ ) SRS antenna ports are respectively mapped to any one of two OFDM symbols in a unit.

① How to select two consecutive/adjacent/non-consecutive/non-adjacent OFDM symbols to serve as a unit

Two consecutive/adjacent/non-consecutive/non-adjacent OFDM symbols may serve as a unit in a random selection manner. The network device may randomly select OFDM symbols and then configure the OFDM symbols to the terminal device, or the terminal device may directly perform random selection.

② How to determine which of the L ( $N_{\mathrm{ap}}^{\mathrm{SRS}}$ ) SRS antenna ports are mapped to a same OFDM symbol of the two OFDM symbols in a unit.

It may be noted that how to determine which of the L ( $N_{\mathrm{ap}}^{\mathrm{SRS}}$ ) SRS antenna ports are mapped to a same OFDM symbol may be performed in manners same as the above manners.

Among the L ( $N_{\mathrm{ap}}^{\mathrm{SRS}}$ ) SRS antenna ports, SRS antenna ports each with a port index belonging to first S (S < L) port indexes are mapped to a same first OFDM symbol, and except the SRS antenna ports each with a port index belonging to the first S port indexes, SRS antenna ports each with a port index belonging to the remaining port indexes are mapped to a same second OFDM symbol.

Among the L ( $N_{\mathrm{ap}}^{\mathrm{SRS}}$ ) SRS antenna ports, SRS antenna ports each with an odd port index are mapped to the same first OFDM symbol, and SRS antenna ports each with an even port index are mapped to the same second OFDM symbol.

2. Meaning of $k_0^{(p_i)}$ $k_0^{(p_i)}$ represents a frequency-domain starting position corresponding to SRS antenna port $i$ ($p_i$) and can be defined by: $k_0^{(p_i)} = \overline{k}_0^{(p_i)} + \sum_{b=0}^{B_{\mathrm{SRS}}} K_{\mathrm{TC}} M_{\mathrm{sc},b}^{\mathrm{SRS}} n_b$ , where $\overline{k}_0^{(p_i)}$ can be defined by:

$$\overline{k}_0^{(p_i)} = n_{\mathrm{shift}} N_{\mathrm{sc}}^{\mathrm{RB}} + (k_{\mathrm{TC}}^{(p_i)} + k_{\mathrm{offset}}^{l'}) \mathrm{mod} K_{\mathrm{TC}}$$ .

1) Meaning of $k_{\mathrm{TC}}^{(p_i)}$ $k_{\mathrm{TC}}^{(p_i)}$ represents a transmission comb offset corresponding to SRS antenna port $i$, i.e., a "first transmission comb offset" in embodiments of the disclosure.

In "scenario 2", if L > 4 ( $N_{\mathrm{ap}}^{\mathrm{SRS}} > 4$ ), different values of L may cause that $k_{\mathrm{TC}}^{(p_i)}$ draws a value in different manners. $k_{\mathrm{TC}}^{(p_i)}$ corresponding to each of the L SRS ports may be determined in the following manners in embodiments of the disclosure.

The terminal device may determine the first transmission comb offset corresponding to each of the L SRS antenna ports, according to the transmission comb number ($K_{\mathrm{TC}}$) and/or the second transmission comb offset ($\overline{k}_{\mathrm{TC}}$) in the configuration information. Alternatively, the terminal device may determine the first transmission comb offset corresponding to each of the L SRS antenna ports, according to the transmission comb number ($K_{\mathrm{TC}}$), the second transmission comb offset ($\overline{k}_{\mathrm{TC}}$), the number of cyclic shifts ( $n_{\mathrm{SRS}}^{\mathrm{cs}}$ ), and the maximum number of cyclic shifts ( $n_{\mathrm{SRS}}^{\mathrm{cs,max}}$ ) in the configuration information.

The above is described in detail below.

Manner 1

If L > 4 ( $N_{\mathrm{ap}}^{\mathrm{SRS}} > 4$ ), $k_{\mathrm{TC}}^{(p_i)}$ may be determined by $K_{\mathrm{TC}}$ and $\overline{k}_{\mathrm{TC}}$.

For example, $k_{\mathrm{TC}}^{(p_i)}$ can satisfy (be represented as/draw a value as): $k_{\mathrm{TC}}^{(p_i)} =$ = $(\overline{k}_{\mathrm{TC}} + \omega^{(p_i)} K_{\mathrm{TC}}) \mathrm{mod} K_{\mathrm{TC}}$.

Meanings of various parameters in the above formula are illustrated in detail below.

1) Meaning of $\overline{k}_{\mathrm{TC}}$

$\overline{k}_{\mathrm{TC}} \in \{0, 1, ..., K_{\mathrm{TC}} - 1\}$ represents a transmission comb offset, i.e., a "second transmission comb offset" in embodiments of the disclosure, and $\overline{k}_{\mathrm{TC}}$ is configured by a higher-layer parameter.

For example, $\overline{k}_{\mathrm{TC}}$ is configured by a parameter transmissionComb in SRS-Resource or SRS-PosResource.

2) Meaning of $\omega^{(p_i)}$

$\omega^{(p_i)}$ represents a positive rational number corresponding to SRS antenna port $i$ ($p_i$) or 0. The value of $\omega^{(p_i)}$ may be configured by a network, pre-configured, defined by a protocol, etc., which is not specifically limited herein.

The value of $\omega^{(p_i)}$ may be a positive rational number less than 1, a positive rational number greater than 1, or 0, which is not specifically limited herein.

For example, the value of $\omega^{(p_i)}$ may be 0, 1/8, 1/4, 3/8, 1/2, 5/8, 3/4, 7/8, 1, 3/2, 2, etc.

In addition, the values of $\omega^{(p_i)}$ respectively corresponding to different SRS antenna ports may be equal or different.

That is, among the L ( $N_{\mathrm{ap}}^{\mathrm{SRS}}$ ) SRS antenna ports, the following may exist.

The values of $\omega^{(p_i)}$ respectively corresponding to all SRS antenna ports may be a same value (i.e., equal).

The values of $\omega^{(p_i)}$ respectively corresponding to SRS antenna ports each with an even port index are a same value (i.e., equal), and the values of $\omega^{(p_i)}$ respectively corresponding to SRS antenna ports each with an odd port index are a same value (i.e., equal).

Among the SRS antenna ports each with an odd port index, the values of $\omega^{(p_i)}$ respectively corresponding to SRS antenna ports each with a port index belonging to first M port indexes are a same value (i.e., equal), except the SRS antenna ports each with a port index belonging to the first M port indexes, the values of $\omega^{(p_i)}$ respectively corresponding to SRS antenna ports each with a port index belonging to first N port indexes are another same value (i.e., equal), and so on, where M is a positive integer, N is a positive integer, and M + N < L.

Among the SRS antenna ports each with an even port index, the values of $\omega^{(p_i)}$ respectively corresponding to SRS antenna ports each with a port index belonging to first P port indexes are a same value (i.e., equal), except the SRS antenna ports each with a port index belonging to the first P port indexes, the values of $\omega^{(p_i)}$ respectively corresponding to SRS antenna ports each with a port index belonging to first T port indexes are another same value (i.e., equal), and so on, where P is a positive integer, T is a positive integer, and P+T<L. P may be equal to M, and T may be equal to N.

The values of $\omega^{(p_i)}$ respectively corresponding to different SRS antenna ports may be equal or different, and M, N, P, and T each may draw different values, which may result in that $k_{\mathrm{TC}}^{(p_i)}$ draws different values. Therefore, for the sake of ease of comprehension, the following examples exemplify values possibly drawn by $k_{\mathrm{TC}}^{(p_i)}$, and those of skill in the art may generalize other examples, which may be not repeated herein.

Example 1

$$k_{\mathrm{TC}}^{(p_i)} = \begin{cases} (\bar{k}_{\mathrm{TC}} + \omega K_{\mathrm{TC}})\mathrm{mod}K_{\mathrm{TC}}, & N_{\mathrm{ap}}^{\mathrm{SRS}} = 5 \text{ and } p_i \in \{1001,1003\} \\ \bar{k}_{\mathrm{TC}}, & \text{otherwise} \end{cases}$$

It may be understood that among 5 SRS antenna ports, transmission comb offsets (i.e., first transmission comb offsets) respectively corresponding to SRS antenna port 0 (i.e., $p_0$ = 1000), SRS antenna port 2 (i.e., $p_2$ = 1002), and SRS antenna port 4 (i.e., $p_4$ = 1004) are equal, i.e., $k_{\mathrm{TC}}^{(p_i)} = \bar{k}_{\mathrm{TC}}$, and $i$ is an even number.

Similarly, among the 5 SRS antenna ports, $\omega^{(p_i)}$ corresponding to SRS antenna port 1 (i.e., $p_1$ = 1001) and $\omega^{(p_i)}$ corresponding to SRS antenna port 3 (i.e., $p_3$ = 1003) are equal, i.e., $\omega^{(p_i)} = \omega$ and thus transmission comb offsets (i.e., first transmission comb offsets) respectively corresponding to SRS antenna port 1 and SRS antenna port 3 are equal, i.e., $k_{\mathrm{TC}}^{(p_i)} = (\bar{k}_{\mathrm{TC}} + \omega K_{\mathrm{TC}})\mathrm{mod}K_{\mathrm{TC}}$, and $i$ is an odd number.

That is, among the L SRS antenna ports, first transmission comb offsets respectively corresponding to SRS antenna ports each with an odd port index are equal, and first transmission comb offsets respectively corresponding to SRS antenna ports each with an even port index are equal.

Example 2

$$k_{\text{TC}}^{(p_i)} = \begin{cases} (\bar{k}_{\text{TC}} + \omega K_{\text{TC}})\text{mod}K_{\text{TC}}, & N_{\text{ap}}^{\text{SRS}} = 6 \text{ and } p_i \in \{1001,1003,1005\} \\ \bar{k}_{\text{TC}}, \text{otherwise} \end{cases}$$

It may be understood that among 6 SRS antenna ports, transmission comb offsets (i.e., first transmission comb offsets) respectively corresponding to SRS antenna port 0 (i.e., $p_0$ = 1000), SRS antenna port 2 (i.e., $p_2$ = 1002), and SRS antenna port 4 (i.e., $p_4$ = 1004) are equal, i.e., $k_{\text{TC}}^{(p_i)} = \bar{k}_{\text{TC}}$ , and $i$ is an even number.

Similarly, among the 6 SRS antenna ports, $\omega^{(p_i)}$ corresponding to SRS antenna port 1 (i.e., $p_1$ = 1001), $\omega^{(p_i)}$ corresponding to SRS antenna port 3 (i.e., $p_3$ = 1003), and $\omega^{(p_i)}$ corresponding to SRS antenna port 5 (i.e., $p_5$ = 1005) are equal, i.e., $\omega^{(p_i)} = \omega$, and thus transmission comb offsets (i.e., first transmission comb offsets) respectively corresponding to SRS antenna port 1, SRS antenna port 3, and SRS antenna port 5 are equal, i.e., $k_{\text{TC}}^{(p_i)} = (\bar{k}_{\text{TC}} + \omega K_{\text{TC}})\text{mod}K_{\text{TC}}$, and $i$ is an odd number.

That is, among the L SRS antenna ports, first transmission comb offsets respectively corresponding to SRS antenna ports each with an odd port index are equal, and first transmission comb offsets respectively corresponding to SRS antenna ports each with an even port index are equal.

Example 3

$$k_{\text{TC}}^{(p_i)} = \begin{cases} (\bar{k}_{\text{TC}} + \omega K_{\text{TC}})\text{mod}K_{\text{TC}}, & N_{\text{ap}}^{\text{SRS}} = 7 \text{ and } p_i \in \{1001,1003,1005\} \\ \bar{k}_{\text{TC}}, \text{otherwise} \end{cases}$$

With reference to "example 1" above, it can be seen that, in example 3, among the L SRS antenna ports, first transmission comb offsets respectively corresponding to SRS antenna ports each with an odd port index are equal, and first transmission comb offsets respectively corresponding to SRS antenna ports each with an even port index are equal.

Example 4

$$k_{\text{TC}}^{(p_i)} = \begin{cases} (\bar{k}_{\text{TC}} + \omega K_{\text{TC}})\text{mod}K_{\text{TC}}, & N_{\text{ap}}^{\text{SRS}} = 8 \text{ and } p_i \in \{1001,1003,1005,1007\} \\ \bar{k}_{\text{TC}}, \text{otherwise} \end{cases}$$

With reference to "example 1" above, it can be seen that, in example 4, among the L SRS antenna ports, first transmission comb offsets respectively corresponding to SRS antenna ports each with an odd port index are equal, and first transmission comb offsets respectively corresponding to SRS antenna ports each with an even port index are equal.

Example 5

$$k_{\text{TC}}^{(p_i)} = \begin{cases} (\bar{k}_{\text{TC}}) \bmod K_{\text{TC}}, & N_{\text{ap}}^{\text{SRS}} = 5 \text{ and } p_i \in \{1001, 1002\} \\ (\bar{k}_{\text{TC}} + K_{\text{TC}}/4) \bmod K_{\text{TC}}, & N_{\text{ap}}^{\text{SRS}} = 5 \text{ and } p_i \in \{1001, 1003\} \\ (\bar{k}_{\text{TC}} + K_{\text{TC}}/2) \bmod K_{\text{TC}}, & N_{\text{ap}}^{\text{SRS}} = 5 \text{ and } p_i \in \{1004\} \end{cases}$$

It may be understood that among 5 SRS antenna ports, $\omega^{(p_i)}$ corresponding to SRS antenna port 0 (i.e., $p_0$ = 1000) and $\omega^{(p_i)}$ corresponding to SRS antenna port 2 (i.e., $p_2$ = 1002) are equal, i.e., $\omega^{(p_i)}$ = 0, and thus transmission comb offsets (i.e., first transmission comb offsets) respectively corresponding to SRS antenna port 0 and SRS antenna port 2 are equal, i.e., $k_{\text{TC}}^{(p_i)} = (\bar{k}_{\text{TC}}) \bmod K_{\text{TC}}$ . In this case, the value of P is 2.

Similarly, among the 5 SRS antenna ports, $\omega^{(p_i)}$ corresponding to SRS antenna port 1 (i.e., $p_1$ = 1001) and $\omega^{(p_i)}$ corresponding to SRS antenna port 3 (i.e., $p_3$ = 1003) are equal, i.e., $\omega^{(p_i)}$ = 1/4, and thus transmission comb offsets (i.e., first transmission comb offsets) respectively corresponding to SRS antenna port 01 and SRS antenna port 3 are equal, i.e., $k_{\text{TC}}^{(p_i)} = (\bar{k}_{\text{TC}} + K_{\text{TC}}/4) \bmod K_{\text{TC}}$ , and $i$ is an odd number. In this case, the value of M is 2.

Similarly, among the 5 SRS antenna ports, $\omega^{(p_i)}$ corresponding to SRS antenna port 4 (i.e., $p_4$ = 1004) satisfies $\omega^{(p_i)}$ = 1/2, and thus a transmission comb offset $k_{\text{TC}}^{(p_i)}$ (i.e., a first transmission comb offset) corresponding to SRS antenna port 4 satisfies: $k_{\text{TC}}^{(p_i)} = (\bar{k}_{\text{TC}} + K_{\text{TC}}/2) \bmod K_{\text{TC}}$. In this case, the value of T is 1.

That is, among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal.

Similarly, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal.

It may be noted that $\omega^{(p_i)}$ in "example 5" may draw other values, which is not specifically limited herein.

Optionally, "example 5" may be only applicable to cases where the value of a transmission comb offset $K_{\text{TC}}$ is 8 or 12.

Example 6

$$k_{\text{TC}}^{(p_i)} = \begin{cases} (\bar{k}_{\text{TC}}) \bmod K_{\text{TC}}, & N_{\text{ap}}^{\text{SRS}} = 6 \text{ and } p_i \in \{1000, 1002\} \\ (\bar{k}_{\text{TC}} + K_{\text{TC}}/4) \bmod K_{\text{TC}}, & N_{\text{ap}}^{\text{SRS}} = 6 \text{ and } p_i \in \{1001, 1003\} \\ (\bar{k}_{\text{TC}} + K_{\text{TC}}/2) \bmod K_{\text{TC}}, & N_{\text{ap}}^{\text{SRS}} = 6 \text{ and } p_i \in \{1004\} \\ (\bar{k}_{\text{TC}} + 3K_{\text{TC}}/4) \bmod K_{\text{TC}}, & N_{\text{ap}}^{\text{SRS}} = 6 \text{ and } p_i \in \{1005\} \end{cases}$$

With reference to "example 5" above, it can be seen that, in example 6, among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal.

Similarly, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal.

It may be noted that $\omega^{(p_i)}$ in "example 6" may draw other values, which is not specifically limited herein.

Optionally, "example 6" may be only applicable to cases where the value of transmission comb offset $K_{TC}$ is 8 or 12.

Example 7

$$k_{TC}^{(p_i)} = \begin{cases} \left(\overline{k}_{TC}\right) \bmod K_{TC}, & N_{ap}^{SRS} = 7 \text{ and } p_i \in \{1000, 1002\} \\ \left(\overline{k}_{TC} + K_{TC}/4\right) \bmod K_{TC}, & N_{ap}^{SRS} = 7 \text{ and } p_i \in \{1001, 1003\} \\ \left(\overline{k}_{TC} + K_{TC}/2\right) \bmod K_{TC}, & N_{ap}^{SRS} = 7 \text{ and } p_i \in \{1004, 1006\} \\ \left(\overline{k}_{TC} + 3K_{TC}/4\right) \bmod K_{TC}, & N_{ap}^{SRS} = 7 \text{ and } p_i \in \{1005\} \end{cases}$$

With reference to "example 5" above, it can be seen that among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal.

Similarly, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal.

It may be noted that $\omega^{(p_i)}$ in "example 7" may draw other values, which is not specifically limited herein.

Optionally, "example 7" may be only applicable to cases where the value of transmission comb offset $K_{TC}$ is 8 or 12.

Example 8

$$k_{TC}^{(p_i)} = \begin{cases} \left(\overline{k}_{TC}\right) \bmod K_{TC}, & N_{ap}^{SRS} = 8 \text{ and } p_i \in \{1000, 1002\} \\ \left(\overline{k}_{TC} + K_{TC}/4\right) \bmod K_{TC}, & N_{ap}^{SRS} = 8 \text{ and } p_i \in \{1001, 1003\} \\ \left(\overline{k}_{TC} + K_{TC}/2\right) \bmod K_{TC}, & N_{ap}^{SRS} = 8 \text{ and } p_i \in \{1004, 1006\} \\ \left(\overline{k}_{TC} + 3K_{TC}/4\right) \bmod K_{TC}, & N_{ap}^{SRS} = 8 \text{ and } p_i \in \{1005, 1007\} \end{cases}$$

With reference to "example 5" above, it can be seen that among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal.

Similarly, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal.

It may be noted that $\omega^{(p_i)}$ in "example 8" may draw other values, which is not specifically limited herein.

Optionally, "example 8" may be only applicable to cases where the value of transmission comb offset $K_{TC}$ is 8 or 12.

Example 9

$$k_{TC}^{(p_i)} = \left( \overline{k}_{TC} + \omega K_{TC} \right) \bmod K_{TC}, \, N_{ap}^{SRS} = 6 \text{ and } p_i \in \{1000, 1001, 1002, 1003, 1004, 1005\}$$

It may be understood that among 6 SRS antenna ports, $\omega^{(p_i)}$ respectively corresponding to the SRS antenna ports is equal, i.e., $\omega^{(p_i)} = \omega$, and thus transmission comb offsets (i.e., first transmission comb offsets) respectively corresponding to the SRS antenna ports are equal.

That is, first transmission comb offsets respectively corresponding to the L SRS antenna ports are equal.

It may be noted that "example 9" may also be adapted to cases such as L=5, 7, or 8, which may not be repeated.

Manner 2

If $L > 4$ ($N_{ap}^{SRS} > 4$), $k_{TC}^{(p_i)}$ may be determined by $\overline{k}_{TC}$. $k_{TC}^{(p_i)}$ can satisfy (be represented as/draw a value as): $k_{TC}^{(p_i)} = \overline{k}_{TC}$.

$\overline{k}_{TC} \in \{0, 1, ..., K_{TC} - 1\}$ represents a transmission comb offset, i.e., a "second transmission comb offset" in embodiments of the disclosure, and $\overline{k}_{TC}$ is configured by a higher-layer parameter.

For example, $\overline{k}_{TC}$ is configured by a parameter transmissionComb in SRS-Resource or SRS-PosResource.

In this case, first transmission comb offsets respectively corresponding to the L SRS antenna ports are equal.

Manner 3

If $L > 4$ ($N_{ap}^{SRS} > 4$), $k_{TC}^{(p_i)}$ may be determined by $K_{TC}$, $\overline{k}_{TC}$, $n_{SRS}^{cs}$, and $n_{SRS}^{cs,max}$.

For example, $k_{TC}^{(p_i)}$ can satisfy (be represented as/draw a value as): $k_{TC}^{(p_i)} = (\overline{k}_{TC} + \omega^{(p_i)} K_{TC}) \bmod K_{TC}$, and $n_{SRS}^{cs} \in \{n_{SRS}^{cs,max} / s^{(p_i)}, ..., n_{SRS}^{cs,max} - 1\}$.

It may be noted that unlike manner 1 above, in manner 3, it requires additional consideration on conditional limitations brought by a value range of $n_{SRS}^{cs}$.

Meanings of various parameters in the above formula are illustrated in detail below.

1) Meaning of $\overline{k}_{TC}$

It may be noted that the meaning of $\overline{k}_{TC}$ is consistent with illustration of $\overline{k}_{TC}$ in "manner 1" above, which may not be repeated herein.

2) Meaning of $\omega^{(p_i)}$

It may be noted that the meaning of $\omega^{(p_i)}$ is consistent with illustration of $\omega^{(p_i)}$ in "manner 1" above, which may not be repeated herein.

3) Meaning of $s^{(p_i)}$

$s^{(p_i)}$ represents a positive integer value corresponding to SRS antenna port $i$ ($p_i$). The value of $s^{(p_i)}$ may be configured by a network, pre-configured, defined by a protocol, etc., which is not specifically limited herein.

The value of $s^{(p_i)}$ may be a positive integer greater than 1, which is not specifically limited herein.

For example, the value of $s^{(p_i)}$ may be 2, 3, 4, 5, 6, 7, 8, etc.

In addition, the values of $s^{(p_i)}$ respectively corresponding to different SRS antenna ports may be equal or different.

That is, among the L ( $N_{\mathrm{ap}}^{\mathrm{SRS}}$ ) SRS antenna ports, the following may exist.

The values of $s^{(p_i)}$ respectively corresponding to all SRS antenna ports may be a same value (i.e., equal).

The values of $s^{(p_i)}$ respectively corresponding to SRS antenna ports each with an even port index are a same value (i.e., equal), and the values of $s^{(p_i)}$ respectively corresponding to SRS antenna ports each with an odd port index are a same value (i.e., equal).

Among the SRS antenna ports each with an odd port index, the values of $s^{(p_i)}$ respectively corresponding to SRS antenna ports each with a port index belonging to first M port indexes are a same value (i.e., equal), except the SRS antenna ports each with a port index belonging to the first M port indexes, the values of $s^{(p_i)}$ respectively corresponding to SRS antenna ports each with a port index belonging to first N port indexes are another same value (i.e., equal), and so on, where M is a positive integer, N is a positive integer, and M + N < L.

Among the SRS antenna ports each with an even port index, the values of $s^{(p_i)}$ respectively corresponding to SRS antenna ports each with a port index belonging to first P port indexes are a same value (i.e., equal), except the SRS antenna ports each with a port index belonging to the first P port indexes, the values of $s^{(p_i)}$ respectively corresponding to SRS antenna ports each with a port index belonging to first T port indexes are another same value (i.e., equal), and so on, where P is a positive integer, T is a positive integer, and P+T<L. P may be equal to M, and T may be equal to N.

The values of $\omega^{(p_i)}$ respectively corresponding to different SRS antenna ports may be equal or different, the values of $s^{(p_i)}$ respectively corresponding to different SRS antenna ports may be equal or different, and M, N, P, and T each may draw different values, which may result in that $k_{\mathrm{TC}}^{(p_i)}$ draws different values. Therefore, for the sake of ease of comprehension, L=6 is taken as an example to exemplify values possibly drawn by $k_{\mathrm{TC}}^{(p_i)}$, and those of skill in the art may generalize other examples such as L=5, 7, 8, etc., which may be not repeated herein.

Example 1

$$k_{\mathrm{TC}}^{(p_i)} =$$
$$\begin{cases} \left(\bar{k}_{\mathrm{TC}} + \omega K_{\mathrm{TC}}\right)\mathrm{mod}K_{\mathrm{TC}}, n_{\mathrm{SRS}}^{\mathrm{cs}} \in \left\{n_{\mathrm{SRS}}^{\mathrm{cs,max}}/s, \ldots, n_{\mathrm{SRS}}^{\mathrm{cs,max}} - 1\right\} \text{ and } N_{\mathrm{ap}}^{\mathrm{SRS}} = 6 \text{ and } p_i \in \{1001,1003,1005\} \\ \bar{k}_{\mathrm{TC}}, \text{otherwise} \end{cases}$$

It may be understood that if $n_{\mathrm{SRS}}^{\mathrm{cs}} \in \left\{n_{\mathrm{SRS}}^{\mathrm{cs,max}}/s, \ldots, n_{\mathrm{SRS}}^{\mathrm{cs,max}} - 1\right\}$, among 6 SRS antenna ports, $\omega^{(p_i)}$ corresponding to SRS antenna port 1 (i.e., $p_1$ = 1001) and $\omega^{(p_i)}$ corresponding to SRS antenna port 3 (i.e., $p_3$ = 1003) are equal, and $s^{(p_i)}$ corresponding to SRS antenna port 1 (i.e., $p_1$ = 1001) and $s^{(p_i)}$ corresponding to SRS antenna port 3 (i.e., $p_3$ = 1003) are equal, i.e., $\omega^{(p_i)} = \omega$ and $s^{(p_i)} = s$, and thus transmission comb offsets (i.e., first transmission comb offsets) respectively corresponding to SRS antenna port 1 and SRS antenna port 3 are equal, i.e., $k_{\mathrm{TC}}^{(p_i)} = \left(\bar{k}_{\mathrm{TC}} + \omega K_{\mathrm{TC}}\right)\mathrm{mod}K_{\mathrm{TC}}$, and $i$ is an odd number.

Similarly, if $n_{\mathrm{SRS}}^{\mathrm{cs}} \notin \left\{n_{\mathrm{SRS}}^{\mathrm{cs,max}}/s, \ldots, n_{\mathrm{SRS}}^{\mathrm{cs,max}} - 1\right\}$, among the 6 SRS antenna ports, $s^{(p_i)}$ corresponding to SRS antenna port 1 (i.e., $p_1$ = 1001) and $s^{(p_i)}$ corresponding to SRS antenna port 3 (i.e., $p_3$ = 1003) are equal, i.e., $s^{(p_i)} = s$, and thus transmission comb offsets (i.e., first transmission comb offsets) respectively corresponding to SRS

$$k_{\text{TC}}^{(p_i)} = \bar{k}_{\text{TC}}$$

antenna port 1 and SRS antenna port 3 are equal, i.e., , and $i$ is an odd number.

Similarly, among the 6 SRS antenna ports, each of $s^{(p_j)}$ corresponding to SRS antenna port 0 (i.e., $p_0$ = 1000), $s^{(p_j)}$ corresponding to SRS antenna port 2 (i.e., $p_2$ = 1002), and $s^{(p_j)}$ corresponding to SRS antenna port 4 (i.e., $p_4$ = 1004) may be an arbitrary value, and thus transmission comb offsets (i.e., first transmission comb offsets) respectively corresponding to SRS antenna port 1, SRS antenna port 2, and SRS antenna port 4 are equal, i.e., $k_{\text{TC}}^{(p_i)} = \bar{k}_{\text{TC}}$ , and $i$ is an even number.

That is, if $n_{\text{SRS}}^{\text{cs}} \in \left\{ n_{\text{SRS}}^{\text{cs,max}} / s, \ldots, n_{\text{SRS}}^{\text{cs,max}} - 1 \right\}$ , among the L SRS antenna ports, first transmission comb offsets respectively corresponding to SRS antenna ports each with an odd port index are equal. If $n_{\text{SRS}}^{\text{cs}} \notin \left\{ n_{\text{SRS}}^{\text{cs,max}} / s, \ldots, n_{\text{SRS}}^{\text{cs,max}} - 1 \right\}$ , among the L SRS antenna ports, first transmission comb offsets respectively corresponding to the L SRS antenna ports are equal. Among the L SRS antenna ports, first transmission comb offsets respectively corresponding to SRS antenna ports each with an even port index are equal.

Example 2

$$k_{\text{TC}}^{(p_i)} = \begin{cases} \left(\bar{k}_{\text{TC}}\right) \bmod K_{\text{TC}}, n_{\text{SRS}}^{\text{cs}} \in \left\{ n_{\text{SRS}}^{\text{cs,max}} / s, \ldots, n_{\text{SRS}}^{\text{cs,max}} - 1 \right\} \text{and} N_{\text{ap}}^{\text{SRS}} = 6 \text{and} p_i \in \left\{ 1000, 1002 \right\} \\ \left(\bar{k}_{\text{TC}} + K_{\text{TC}} / 4\right) \bmod K_{\text{TC}}, n_{\text{SRS}}^{\text{cs}} \in \left\{ n_{\text{SRS}}^{\text{cs,max}} / s, \ldots, n_{\text{SRS}}^{\text{cs,max}} - 1 \right\} \text{and} N_{\text{ap}}^{\text{SRS}} = 6 \text{and} p_i \in \left\{ 1001, 1003 \right\} \\ \left(\bar{k}_{\text{TC}} + K_{\text{TC}} / 2\right) \bmod K_{\text{TC}}, n_{\text{SRS}}^{\text{cs}} \in \left\{ n_{\text{SRS}}^{\text{cs,max}} / s, \ldots, n_{\text{SRS}}^{\text{cs,max}} - 1 \right\} \text{and} N_{\text{ap}}^{\text{SRS}} = 6 \text{and} p_i \in \left\{ 1004 \right\} \\ \left(\bar{k}_{\text{TC}} + 3K_{\text{TC}} / 4\right) \bmod K_{\text{TC}}, n_{\text{SRS}}^{\text{cs}} \in \left\{ n_{\text{SRS}}^{\text{cs,max}} / s, \ldots, n_{\text{SRS}}^{\text{cs,max}} - 1 \right\} \text{and} N_{\text{ap}}^{\text{SRS}} = 6 \text{and} p_i \in \left\{ 1005 \right\} \\ \bar{k}_{\text{TC}}, \text{otherwise} \end{cases}$$

It may be understood that if $n_{\text{SRS}}^{\text{cs}} \in \left\{ n_{\text{SRS}}^{\text{cs,max}} / s, \ldots, n_{\text{SRS}}^{\text{cs,max}} - 1 \right\}$ , among 6 SRS antenna ports, $\omega^{(p_j)}$ corresponding to SRS antenna port 0 (i.e., $p_0$ = 1000) and $\omega^{(p_j)}$ corresponding to SRS antenna port 2 (i.e., $p_2$ = 1002) are equal, and $s^{(p_j s)}$ corresponding to SRS antenna port 0 (i.e., $p_0$ = 1000) and $s^{(p_j)}$ corresponding to SRS antenna port 2 (i.e., $p_2$ = 1002) are equal, i.e., $\omega^{(p_j)}$ = 0 and $s^{(p_j)}$ = s, and thus transmission comb offsets (i.e., first transmission comb offsets) respectively corresponding to SRS antenna port 0 and SRS antenna port 2 are equal, i.e., $k_{\text{TC}}^{(p_i)} = \left(\bar{k}_{\text{TC}}\right) \bmod K_{\text{TC}}$ . In this case, the value of P is 2.

Similarly, if $n_{\text{SRS}}^{\text{cs}} \in \left\{ n_{\text{SRS}}^{\text{cs,max}} / s, \ldots, n_{\text{SRS}}^{\text{cs,max}} - 1 \right\}$ , among the 6 SRS antenna ports, $\omega^{(p_j)}$ corresponding to SRS antenna port 1 (i.e., $p_1$ = 1001) and $\omega^{(p_j)}$ corresponding to SRS antenna port 3 (i.e., $p_3$ = 1003) are equal, and $s^{(p_j)}$ corresponding to SRS antenna port 1 (i.e., $p_1$ = 1001) and $s^{(p_j)}$ corresponding to SRS antenna port 3 (i.e., $p_3$ = 1003) are equal, i.e., $\omega^{(p_j)}$ = 1/4 and $s^{(p_j)}$ = s, and thus transmission comb offsets (i.e., first transmission comb offsets) respectively corresponding to SRS antenna port 1 and SRS antenna port 3 are equal, i.e., $k_{\text{TC}}^{(p_i)} = \left(\bar{k}_{\text{TC}} + K_{\text{TC}}/4\right) \bmod K_{\text{TC}}$ , and $i$ is an odd number. In this case, the value of M is 2.

Similarly, if $n_{\text{SRS}}^{\text{cs}} \in \left\{ n_{\text{SRS}}^{\text{cs,max}} / s, \ldots, n_{\text{SRS}}^{\text{cs,max}} - 1 \right\}$ , among the 6 SRS antenna ports, $\omega^{(p_j)}$ corresponding to SRS antenna port 4 (i.e., $p_4$ = 1004) satisfies $\omega^{(p_j)}$ = 1/2, and $s^{(p_j)}$ corresponding to SRS antenna port 4 (i.e., $p_4$ = 1004) satisfies $s^{(p_j)}$ = s, and thus a transmission comb offset $k_{\text{TC}}^{(p_i)}$ (i.e., a first transmission comb offset) corresponding to SRS antenna port 4 satisfies: $k_{\text{TC}}^{(p_i)} = \left(\bar{k}_{\text{TC}} + K_{\text{TC}}/2\right)\text{mod}K_{\text{TC}}$ . In this case, the value of T is 1.

Similarly, if $n_{\text{SRS}}^{\text{cs}} \notin \left\{n_{\text{SRS}}^{\text{cs,max}}/s, \ldots, n_{\text{SRS}}^{\text{cs,max}} - 1\right\}$ , a transmission comb offset $k_{\text{TC}}^{(p_i)}$ (i.e., a first transmission comb offset) corresponding to each of the 6 SRS antenna ports satisfies: $k_{\text{TC}}^{(p_i)} = \bar{k}_{\text{TC}}$ .

That is, if $n_{\text{SRS}}^{\text{cs}} \in \left\{n_{\text{SRS}}^{\text{cs,max}}/s^{(p_i)}, \ldots, n_{\text{SRS}}^{\text{cs,max}} - 1\right\}$ , among SRS antenna ports each with an odd port index in the L SRS antenna ports, first transmission comb offsets respectively corresponding to SRS antenna ports each with a port index belonging to first M port indexes are equal, and except the SRS antenna ports each with a port index belonging to the first M port indexes, first transmission comb offsets respectively corresponding to SRS antenna ports each with a port index belonging to first N port indexes are equal.

Similarly, if $n_{\text{SRS}}^{\text{cs}} \in \left\{n_{\text{SRS}}^{\text{cs,max}}/s^{(p_i)}, \ldots, n_{\text{SRS}}^{\text{cs,max}} - 1\right\}$ , among SRS antenna ports each with an even port index in the L SRS antenna ports, first transmission comb offsets respectively corresponding to SRS antenna ports each with a port index belonging to first P port indexes are equal, and except the SRS antenna ports each with a port index belonging to the first P port indexes, first transmission comb offsets respectively corresponding to SRS antenna ports each with a port index belonging to first T port indexes are equal.

Similarly, if $n_{\text{SRS}}^{\text{cs}} \notin \left\{n_{\text{SRS}}^{\text{cs,max}}/s, \ldots, n_{\text{SRS}}^{\text{cs,max}} - 1\right\}$ , first transmission comb offsets respectively corresponding to the L SRS antenna ports are equal.

It may be noted that $\omega^{(pi)}$ in "example 2" may draw other values, which is not specifically limited herein.

Optionally, "example 2" may be only applicable to cases where the value of transmission comb offset $K_{\text{TC}}$ is 8 or 12.

### 3. Meaning of $n_{shift}$

It may be noted that the meaning of $n_{shift}$ is consistent with illustration of $n_{shift}$ in "manner 1" above, which may not be repeated herein.

4. Meaning of $k_{\text{offset}}^{l'}$

It may be noted that the meaning of $k_{\text{offset}}^{l'}$ is consistent with illustration of $k_{\text{offset}}^{l'}$ in "manner 1" above, which may not be repeated herein.

### 5. Meaning of $n_b$

It may be noted that the meaning of $n_b$ is consistent with illustration of $n_b$ in "manner 1" above, which may not be repeated herein.

In addition, it may be noted that those of skill in the art may combine the above "manner 1", "manner 2", and "manner 3" instead of excluding them, and the solutions obtained after combination also fall within the scope of protection of the embodiments of the disclosure, which may not be repeated herein.

In summary, the following exemplarily describes a resource mapping method for an RS in embodiments of the disclosure by taking that a network device transmits configuration information to a terminal device to determine SRS resource mapping and an SRS resource pattern as an example.

FIG. 2 is a schematic flow chart illustrating a resource mapping method for an RS in embodiments of the disclosure. As illustrated in FIG. 2, the method specifically includes the following.

At S210, a network device transmits configuration information.

Correspondingly, a terminal device obtains the configuration information.

The configuration information is used to determine a first transmission comb offset corresponding to each of L SRS antenna ports in an SRS resource, the first transmission comb offset is used to determine a frequency-domain starting position corresponding to each of the L SRS antenna ports, and a value of L is an integer greater than 4.

It may be noted that for specific illustration of "the configuration information is used to determine the first transmission comb offset corresponding to each of the L SRS antenna ports in the SRS resource", reference can be made to the content in "meaning of $k_{\text{TC}}^{(p_i)}$ " in "scenario 1" or "scenario 2", which may not be repeated herein.

For specific illustration of "the first transmission comb offset is used to determine the frequency-domain starting position of each of the L SRS antenna ports", reference can be made to the content in "meaning of $k_0^{(p_i)}$" in "scenario 1" or "scenario 2", which may not be repeated herein.

At S220, the terminal device determines the first transmission comb offset corresponding to each of the L SRS antenna ports in the SRS resource, according to the configuration information. The first transmission comb offset is used to determine the frequency-domain starting position of each of the L SRS antenna ports.

It may be noted that for specific illustration of "the terminal device determines the first transmission comb offset corresponding to each of the L SRS antenna ports in the SRS resource according to the configuration information", reference can be made to the content in "meaning of $k_{TC}^{(p_i)}$" in "scenario 1" or "scenario 2", which may not be repeated herein.

As can be seen, in embodiments of the disclosure, the network device may transmit the configuration information to the terminal device, so that the terminal device may determine, according to the configuration information, the transmission comb offset, i.e., the first transmission comb offset, corresponding to each of the L (L > 4) SRS antenna ports in the SRS resources, and thus the frequency-domain starting position corresponding to each of the L SRS antenna ports may be determined by means of the first transmission comb offset, thereby realizing SRS resource mapping and an SRS resource pattern.

The foregoing solution of the embodiments of the disclosure is mainly introduced from the viewpoint of the method side. It may be understood that, in order to implement the above functions, the terminal device or the network device includes hardware structures and/or software modules for performing the respective functions. Those skilled in the art should easily recognize that, in combination with the units and algorithmic operations of various examples illustrated in the embodiments provided herein, the disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the illustrated functions for each particular application, but such embodiment should not be considered as beyond the scope of the disclosure.

According to the embodiments of the disclosure, division of functional units may be performed for the electronic device in accordance with the foregoing method examples. For example, each functional unit may be divided according to each function, and two or more functions may be integrated in one processing unit. The above-mentioned integrated unit can be implemented in the form of hardware or software program modules. It should be noted that the division of units in the embodiments of the disclosure is schematic, and is merely a logical function division, and there may be other division manners in actual embodiments.

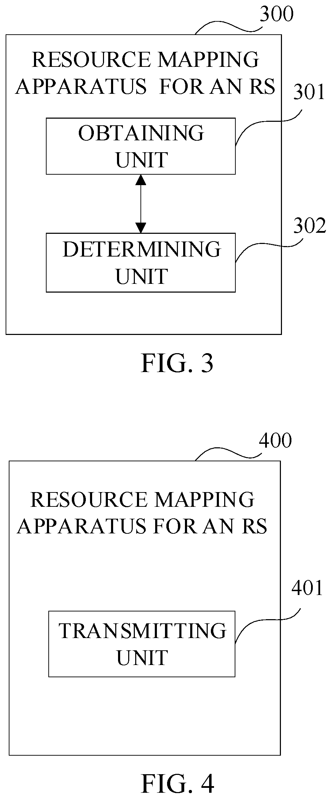

FIG. 3 is a block diagram of functional units of a resource mapping apparatus for an RS in embodiments of the disclosure. In the case of integrated units, the resource mapping apparatus 300 for an RS includes an obtaining unit 301 and a determining unit 302.

It may be noted that the obtaining unit 301 may be a module unit used for transmission and reception of signals, data, information, etc. The determining unit 302 may be a module unit used for processing signals, data, information, etc., which may not be specifically limited herein.

The resource mapping apparatus 300 for an RS may further include a storage unit. The storage unit is configured to store computer program codes or instructions executed by the resource mapping device 300 for an RS. The storage unit may be a memory.

Additionally, it may be noted that the resource mapping apparatus 300 for an RS may be a chip or a chip module.

The obtaining unit 301 and the determining unit 302 can be integrated into a unit. For example, the obtaining unit 301 and the determining unit 302 can be integrated into a processing unit. The processing unit may be a processor or a controller, for example, a central processing unit (CPU), a general-purpose processor, a digital signal processor (DSP), an application-specific integrated circuit (ASIC), a field programmable gate array (FPGA), other programmable logic devices, transistor logic devices, hardware components, or any combination thereof. Various exemplary logical blocks, modules, and circuits described in the disclosure may be achieved or implemented. The processing unit may also be a combination realizing computing functions, for example, a combination of one or more microprocessors, a combination of the DSP and the microprocessor, or the like.

The obtaining unit 301 and the determining unit 302 can be separate units. For example, the obtaining unit 301 may be a communication unit. The communication unit may be a communication interface, a transceiver, a transceiver circuit, etc.

In specific implementation, the determining unit 302 is configured to perform any operation performed by the terminal device in the above method embodiment. When the determining unit 302 performs data transmission such as transmission, the obtaining unit 301 can be optionally invoked to complete corresponding operations. Detailed illustrations are as follows.

The obtaining unit 301 is configured to obtain configuration information.

The determining unit 302 is configured to determine a first transmission comb offset corresponding to each of L SRS antenna ports in an SRS resource, according to the configuration information. The first transmission comb offset is used to determine a frequency-domain starting position corresponding to each of the L SRS antenna ports, and a value of L is an integer greater than 4.

It may be noted that specific implementation of each operation in the embodiment in FIG. 3 can refer to the illustration of the method embodiment above, which may not be repeated herein.

Specifically, among the L SRS antenna ports, first transmission comb offsets respectively corresponding to SRS antenna ports each with an odd port index are equal. Among the L SRS antenna ports, first transmission comb offsets respectively corresponding to SRS antenna ports each with an even port index are equal.

Specifically, first transmission comb offsets respectively corresponding to the L SRS antenna ports are equal.

Specifically, among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, where M is a positive integer, N is a positive integer, and M + N < L.

Specifically, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, where P is a positive integer, T is a positive integer, and P+T<L.

Specifically, the L SRS antenna ports are mapped to a same OFDM symbol.

Specifically, among the L SRS antenna ports, SRS antenna ports each with a port index belonging to first S port indexes are mapped to a same first OFDM symbol. Among the L SRS antenna ports, except the SRS antenna ports each with a port index belonging to the first S port indexes, SRS antenna ports each with a port index belonging to the remaining port indexes are mapped to a same second OFDM symbol, where S is a positive integer, and S < L.

Specifically, the configuration information includes at least one of: a transmission comb number, a second transmission comb offset, number of cyclic shifts, or maximum number of cyclic shifts.

Specifically, the determining unit 302 configured to determine, according to the configuration information, the first transmission comb offset corresponding to each of the L SRS antenna ports, is specifically configured to determine, according to the transmission comb number and/or the second transmission comb offset, the first transmission comb offset corresponding to each of the L SRS antenna ports.

Specifically, the determining unit 302 configured to determine, according to the transmission comb number and/or the second transmission comb offset, the first transmission comb offset corresponding to each of the L SRS antenna ports, is specifically configured to determine, according to a first formula, the first transmission comb offset corresponding to each of the L SRS antenna ports. The first formula is $k_{\text{TC}}^{(p_i)} = \left(\bar{k}_{\text{TC}} + \omega^{(p_i)} K_{\text{TC}}\right) \bmod K_{\text{TC}}$, where $k_{\text{TC}}^{(p_i)}$ represents the first transmission comb offset, $K_{\text{TC}}$ represents the transmission comb number, $\bar{k}_{\text{TC}}$ represents the second transmission comb offset, and $\omega^{(p_i)}$ is a positive rational number or 0.

Specifically, the determining unit 302 configured to determine, according to the transmission comb number and/or the second transmission comb offset, the first transmission comb offset corresponding to each of the L SRS antenna ports, is specifically configured to determine, according to a second formula, the first transmission comb offset corresponding to each of the L SRS antenna ports. The second formula is $k_{\text{TC}}^{(p_i)} = \bar{k}_{\text{TC}}$, where $k_{\text{TC}}^{(p_i)}$ represents the first transmission comb offset, and $\bar{k}_{\text{TC}}$ represents the second transmission comb offset.

Specifically, the determining unit 302 configured to determine, according to the configuration information, the first transmission comb offset corresponding to each of the L SRS antenna ports, is specifically configured to determine the first transmission comb offset corresponding to each of the L SRS antenna ports, according to the transmission comb number, the second transmission comb offset, the number of cyclic shifts, and the maximum number of cyclic shifts.

Specifically, the determining unit 302 configured to determine the first transmission comb offset corresponding to each of the L SRS antenna ports, according to the transmission comb number, the second transmission comb offset, the number of cyclic shifts, and the maximum number of cyclic shifts, is specifically configured to determine, according to a third formula, the first transmission comb offset corresponding to each of the L SRS antenna ports. The third formula is $k_{\mathrm{TC}}^{(p_i)} = \left(\bar{k}_{\mathrm{TC}} + \omega^{(p_i)} K_{\mathrm{TC}}\right) \bmod K_{\mathrm{TC}}$, and $n_{\mathrm{SRS}}^{\mathrm{cs}} \in \left\{ n_{\mathrm{SRS}}^{\mathrm{cs,max}} / s^{(p_i)}, \ldots, n_{\mathrm{SRS}}^{\mathrm{cs,max}} - 1\right\}$. $k_{\mathrm{TC}}^{(p_i)}$ represents the first transmission comb offset, $K_{\mathrm{TC}}$ represents the transmission comb number, $\bar{k}_{\mathrm{TC}}$ represents the second transmission comb offset, $n_{\mathrm{SRS}}^{\mathrm{cs}}$ represents the number of cyclic shifts, $n_{\mathrm{SRS}}^{\mathrm{cs,max}}$ represents the maximum number of cyclic shifts, $\omega^{(p_i)}$ is a positive rational number or 0, and $s^{(p_i)}$ is a positive integer.

FIG. 4 is another block diagram of functional units of a resource mapping apparatus for an RS in embodiments of the disclosure. In the case of integrated units, the resource mapping apparatus 400 for an RS includes a transmitting unit 401.

It may be noted that the transmitting unit 401 may be a module unit used for processing signals, data, information, etc., which may not be specifically limited herein.

The resource mapping apparatus 400 for an RS may further include a storage unit. The storage unit is configured to store computer program codes or instructions executed by the resource mapping device 400 for an RS. The storage unit may be a memory.

Additionally, it may be noted that the resource mapping apparatus 400 for an RS may be a chip or a chip module.

The resource mapping apparatus 400 for an RS may further include a processing unit. The processing unit may be a processor or a controller, for example, a CPU, a general-purpose processor, a DSP, an ASIC, a FPGA, other programmable logic devices, transistor logic devices, hardware components, or any combination thereof. Various exemplary logical blocks, modules, and circuits described in the disclosure may be achieved or implemented. The processing unit may also be a combination realizing computing functions, for example, a combination of one or more microprocessors, a combination of the DSP and the microprocessor, or the like.

The transmitting unit 401 may be a communication unit. The communication unit may be a communication interface, a transceiver, a transceiver circuit, etc.

In specific implementation, the transmitting unit 401 is configured to perform any operation performed by the network device in the above method embodiment. Detailed illustrations are as follows.

The transmitting unit 401 is configured to transmit configuration information. The configuration information is used to determine a first transmission comb offset corresponding to each of L SRS antenna ports in an SRS resource. The first transmission comb offset is used to determine a frequency-domain starting position corresponding to each of the L SRS antenna ports, and a value of L is an integer greater than 4.

It may be noted that specific implementation of each operation in the embodiment in FIG. 4 can refer to the illustration of the method embodiment above, which may not be repeated herein.

Specifically, among the L SRS antenna ports, first transmission comb offsets respectively corresponding to SRS antenna ports each with an odd port index are equal. Among the L SRS antenna ports, first transmission comb offsets respectively corresponding to SRS antenna ports each with an even port index are equal.

Specifically, first transmission comb offsets respectively corresponding to the L SRS antenna ports are equal.

Specifically, among SRS antenna ports each with an odd port index in the L SRS antenna ports, first transmission comb offsets respectively corresponding to SRS antenna ports each with a port index belonging to first M port indexes are equal. Among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, where M is a positive integer, N is a positive integer, and M + N < L.

Specifically, among SRS antenna ports each with an even port index in the L SRS antenna ports, first transmission comb offsets respectively corresponding to SRS antenna ports each with a port index belonging to first P port indexes are equal. Among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, where P is a positive integer, T is a positive integer, and P+T<L.

Specifically, the L SRS antenna ports are mapped to a same OFDM symbol.

Specifically, among the L SRS antenna ports, SRS antenna ports each with a port index belonging to first R port indexes are mapped to a same first OFDM symbol. Among the L SRS antenna ports, except the SRS antenna ports each with a port index belonging to the first R port indexes, SRS antenna ports each with a port index belonging to the remaining port indexes are mapped to a same second OFDM symbol, where S is a positive integer, and R < L.

Specifically, the configuration information includes at least one of: a transmission comb number, a second transmission comb offset, number of cyclic shifts, or maximum number of cyclic shifts.

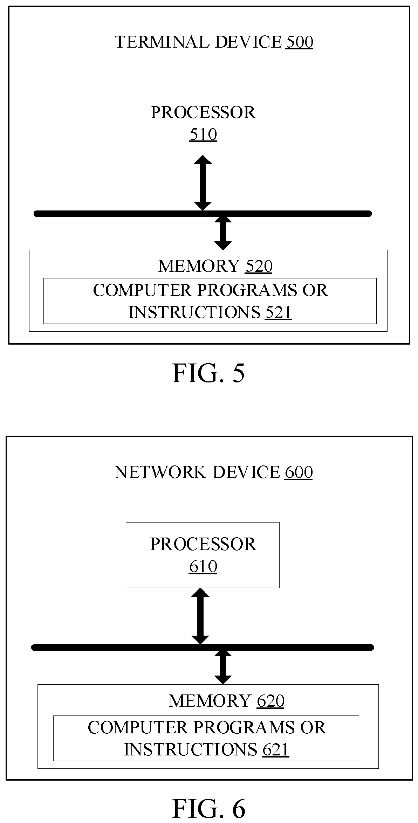

Refer to FIG. 5, where FIG. 5 is a schematic structural diagram of a terminal device in embodiments of the disclosure. The terminal device 500 includes a processor 510, a memory 520, and a communication bus configured to connect the processor 510 and the memory 520.

The memory 520 includes, but is not limited to, a random access memory (RAM), a read-only memory (ROM), an erasable programmable read-only memory (EPROM), or a compact disc read-only memory (CD-ROM). The memory 520 is configured to store program codes executed by the terminal device 500 and data transmitted by the terminal device 500.

The terminal device 500 may further include a communication interface configured to receive and transmit data.

The processor 510 may be one or more CPUs. In the case where the processor 510 is one CPU, the CPU may be a single core CPU or a multi-core CPU.

The processor 510 in the terminal device 500 is configured to execute computer programs or instructions 521 stored in the memory 520 to obtain configuration information and determine, according to the configuration information, a first transmission comb offset corresponding to each of L SRS antenna ports in an SRS resource. The first transmission comb offset is used to determine a frequency-domain starting position corresponding to each of the L SRS antenna ports, and a value of L is an integer greater than 4.

It may be noted that specific implementation of each operation can refer to the corresponding illustration of the method embodiment above, and the terminal device 500 may be configured to perform the method performed by the terminal device side in the method embodiment of the disclosure, which may not be repeated herein.

Refer to FIG. 6, where FIG. 6 is a schematic structural diagram of a network device in embodiments of the disclosure. The network device 600 includes a processor 610, a memory 620, and a communication bus configured to connect the processor 610 and the memory 620.

The memory 620 includes, but is not limited to, an RAM, an ROM, an EPROM, or a CD-ROM. The memory 620 is configured to store program codes executed by the network device 600 and data transmitted by the network device 600.

The network device 600 may further include a communication interface configured to receive and transmit data.

The processor 610 may be one or more CPUs. In the case where the processor 610 is one CPU, the CPU may be a single core CPU or a multi-core CPU.

The processor 610 in the network device 600 is configured to execute computer programs or instructions 621 stored in the memory 620 to transmit configuration information. The configuration information is used to determine a first transmission comb offset corresponding to each of L SRS antenna ports in an SRS resource. The first transmission comb offset is used to determine a frequency-domain starting position corresponding to each of the L SRS antenna ports, and a value of L is an integer greater than 4.

It may be noted that specific implementation of each operation can refer to the corresponding illustration of the method embodiment above, and the network device 600 may be configured to perform the method performed by the network device side in the method embodiment of the disclosure, which may not be repeated herein.

A chip is further provided in embodiments of the disclosure. The chip includes a processor, a memory, and computer programs or instructions stored in the memory. The processor is configured to execute the computer programs or instructions to implement the operations described in the method embodiments above.

A chip module is further provided in embodiments of the disclosure. The chip module includes a transceiver component and a chip. The chip includes a processor, a memory, and computer programs or instructions stored in the memory. The processor is configured to execute the computer programs or instructions to implement the operations described in the method embodiments above.

A computer-readable storage medium is further provided in embodiments of the disclosure. The computer-readable storage medium is configured to store computer programs or instructions, where when the computer programs or instructions are executed, the operations described in the method embodiments above are implemented.

A computer program product is further provided in embodiments of the disclosure. The computer program product includes computer programs or instructions, where when the computer programs or instructions are executed, the operations described in the method embodiments above are implemented.

In the foregoing embodiments, the illustration of each embodiment has its own emphasis. For the parts not described in detail in a certain embodiment, reference may be made to related illustrations in other embodiments.

The algorithmic operations and the method illustrated in embodiments may be implemented as hardware, or may be implemented by a processor performing software instructions. The software instructions may be composed with corresponding software modules. The software module can be stored in a storage medium such as an RAM, a flash memory, an ROM, an EPROM, an electrically erasable programmable read-only memory (EEPROM), a register, a hard disc, a mobile hard disc, or a CD-ROM, or in storage media with any other forms known in this field. An exemplary storage medium is coupled to the processor, so that the processor can read information from the storage medium and can write information to the storage medium. Of course, the storage medium can also be a part of the processor. The processor and the storage medium may be located in an ASIC. In addition, the ASIC may be located in a terminal device or a management device. The processor and the storage medium may also be presented as discrete components in the terminal device or the management device.

Those skilled in the art can appreciate that, in the above-mentioned one or more embodiments, all or part of the illustrated functions can be implemented through software, hardware, firmware, or any other combination thereof. When implemented by software, all or part of the above embodiments can be implemented in the form of a computer program product. The computer program product includes one or more computer instructions. When the computer instructions are loaded and executed on a computer, all or part of the processes or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer-accessible usablemedium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Each module/unit in the apparatuses or products described in the foregoing embodiments may be a software module/unit, a hardware module/unit, or may be partially a software module/unit and partially a hardware module/unit. For example, for each apparatus and product applied to or integrated into the chip, each module/unit included can be implemented by hardware such as circuits, or at least part of modules/units can be implemented by software programs that run on a processor integrated into the chip, and the rest of (if any) modules/units can be implemented by hardware such as circuits. For each apparatus and product applied to or integrated into the chip module, each module/unit included can be implemented by hardware such as circuit, and different modules/units can be located in a same component (such as a chip, a circuit module, etc.) or different components of the chip module. Alternatively, at least part of modules/units can be implemented by software programs that run on the processor integrated into the chip module, and the rest of (if any) modules/units can be implemented by hardware such as circuits. For each apparatus and product applied to or integrated into the terminal device, each module/unit included can be implemented by hardware such as circuits, and different modules/units can be located in a same component (e.g., a chip, a circuit module, etc.) or different components in the terminal device, or at least part of modules/units can be implemented by software programs that run on the processor integrated into the terminal device, and the rest of (if any) modules/units can be implemented by hardware such as circuits.

The above-mentioned embodiments provide further details of the purpose, technical solutions and beneficial effects of the embodiments of this disclosure. It can be understood that, the above is only specific implementation manners of the embodiments of the disclosure and is not intended to limit the scope of protection of the embodiments of the disclosure. Any modification, equivalent arrangements and improvement made on the basis of the technical solution of the embodiments of the disclosure shall be included in the scope of protection of the embodiments of the disclosure.

**Claims**

1. A resource mapping method for a reference signal (RS), comprising:

    obtaining configuration information; and
    determining, according to the configuration information, a first transmission comb offset corresponding to each of L sounding reference signal (SRS) antenna ports in an SRS resource, the first transmission comb offset being used to determine a frequency-domain starting position corresponding to each of the L SRS antenna ports, and a value of L being an integer greater than 4.

2. The method of claim 1, wherein

    among the L SRS antenna ports, first transmission comb offsets respectively corresponding to SRS antenna ports each with an odd port index are equal; and
    among the L SRS antenna ports, first transmission comb offsets respectively corresponding to SRS antenna ports each with an even port index are equal.

3. The method of claim 1, wherein first transmission comb offsets respectively corresponding to the L SRS antenna ports are equal.

4. The method of claim 1, wherein

among SRS antenna ports each with an odd port index in the L SRS antenna ports, first transmission comb offsets respectively corresponding to SRS antenna ports each with a port index belonging to first M port indexes are equal; and
among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, wherein M is a positive integer, N is a positive integer, and M + N < L.

5. The method of claim 1, wherein

among SRS antenna ports each with an even port index in the L SRS antenna ports, first transmission comb offsets respectively corresponding to SRS antenna ports each with a port index belonging to first P port indexes are equal; and
among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, wherein P is a positive integer, T is a positive integer, and P+T<L.

6. The method of claim 1, wherein the L SRS antenna ports are mapped to a same orthogonal frequency division multiplexing (OFDM) symbol.

7. The method of claim 1, wherein

among the L SRS antenna ports, SRS antenna ports each with a port index belonging to first S port indexes are mapped to a same first OFDM symbol; and
among the L SRS antenna ports, except the SRS antenna ports each with a port index belonging to the first S port indexes, SRS antenna ports each with a port index belonging to the remaining port indexes are mapped to a same second OFDM symbol, wherein S is a positive integer, and S < L.

8. The method of claim 1, wherein the configuration information comprises at least one of:
a transmission comb number, a second transmission comb offset, number of cyclic shifts, or maximum number of cyclic shifts.

9. The method of claim 8, wherein determining, according to the configuration information, the first transmission comb offset corresponding to each of the L SRS antenna ports, comprises:
determining, according to the transmission comb number and/or the second transmission comb offset, the first transmission comb offset corresponding to each of the L SRS antenna ports.

10. The method of claim 9, wherein determining, according to the transmission comb number and/or the second transmission comb offset, the first transmission comb offset corresponding to each of the L SRS antenna ports, comprises:

determining, according to a first formula, the first transmission comb offset corresponding to each of the L SRS antenna ports, wherein the first formula is:

$$k_{\mathrm{TC}}^{(p_i)} = \left(\bar{k}_{\mathrm{TC}} + \omega^{(p_i)} K_{\mathrm{TC}}\right) \mathrm{mod} K_{\mathrm{TC}};$$

wherein $k_{\mathrm{TC}}^{(p_i)}$ represents the first transmission comb offset, $K_{\mathrm{TC}}$ represents the transmission comb number, $\bar{k}_{\mathrm{TC}}$ represents the second transmission comb offset, and $\omega^{(p_i)}$ is a positive rational number or 0.

11. The method of claim 9, wherein determining, according to the transmission comb number and/or the second transmission comb offset, the first transmission comb offset corresponding to each of the L SRS antenna ports, comprises:

determining, according to a second formula, the first transmission comb offset corresponding to each of the L SRS antenna ports, wherein the second formula is:

$$k_{\text{TC}}^{(p_i)} = \bar{k}_{\text{TC}};$$

wherein $k_{\text{TC}}^{(p_i)}$ represents the first transmission comb offset, and $\bar{k}_{\text{TC}}$ represents the second transmission comb offset.

**12.** The method of claim 8, wherein determining, according to the configuration information, the first transmission comb offset corresponding to each of the L SRS antenna ports, comprises:
determining the first transmission comb offset corresponding to each of the L SRS antenna ports, according to the transmission comb number, the second transmission comb offset, the number of cyclic shifts, and the maximum number of cyclic shifts.

**13.** The method of claim 12, wherein determining the first transmission comb offset corresponding to each of the L SRS antenna ports, according to the transmission comb number, the second transmission comb offset, the number of cyclic shifts, and the maximum number of cyclic shifts, comprises:

determining, according to a third formula, the first transmission comb offset corresponding to each of the L SRS antenna ports, wherein the third formula is:

$$k_{\text{TC}}^{(p_i)} = \left(\bar{k}_{\text{TC}} + \omega^{(p_i)} K_{\text{TC}}\right)\bmod K_{\text{TC}}, \text{ and } n_{\text{SRS}}^{\text{cs}} \in \left\{n_{\text{SRS}}^{\text{cs,max}}/s^{(p_i)}, \ldots, n_{\text{SRS}}^{\text{cs,max}} - 1\right\};$$

wherein $k_{\text{TC}}^{(p_i)}$ represents the first transmission comb offset, $K_{\text{TC}}$ represents the transmission comb number, $\bar{k}_{\text{TC}}$ represents the second transmission comb offset, $n_{\text{SRS}}^{\text{cs}}$ represents the number of cyclic shifts, $n_{\text{SRS}}^{\text{cs,max}}$ represents the maximum number of cyclic shifts, $\omega^{(p_i)}$ is a positive rational number or 0, and $s^{(p_i)}$ is a positive integer.

**14.** A resource mapping method for a reference signal (RS), comprising:
transmitting configuration information, the configuration information being used to determine a first transmission comb offset corresponding to each of L sounding reference signal (SRS) antenna ports in an SRS resource, the first transmission comb offset being used to determine a frequency-domain starting position corresponding to each of the L SRS antenna ports, and a value of L being an integer greater than 4.

**15.** The method of claim 14, wherein

among the L SRS antenna ports, first transmission comb offsets respectively corresponding to SRS antenna ports each with an odd port index are equal; and
among the L SRS antenna ports, first transmission comb offsets respectively corresponding to SRS antenna ports each with an even port index are equal.

**16.** The method of claim 14, wherein first transmission comb offsets respectively corresponding to the L SRS antenna ports are equal.

**17.** The method of claim 14, wherein

among SRS antenna ports each with an odd port index in the L SRS antenna ports, first transmission comb offsets respectively corresponding to SRS antenna ports each with a port index belonging to first M port indexes are equal; and
among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, wherein M is a positive integer, N is a positive integer, and M + N < L.

**18.** The method of claim 14, wherein

among SRS antenna ports each with an even port index in the L SRS antenna ports, first transmission comb offsets respectively corresponding to SRS antenna ports each with a port index belonging to first P port indexes are equal; and

among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, wherein P is a positive integer, T is a positive integer, and P+T<L.

19. The method of claim 14, wherein the L SRS antenna ports are mapped to a same orthogonal frequency division multiplexing (OFDM) symbol.

20. The method of claim 14, wherein

among the L SRS antenna ports, SRS antenna ports each with a port index belonging to first R port indexes are mapped to a same first OFDM symbol; and

among the L SRS antenna ports, except the SRS antenna ports each with a port index belonging to the first R port indexes, SRS antenna ports each with a port index belonging to the remaining port indexes are mapped to a same second OFDM symbol, wherein S is a positive integer, and R < L.

21. The method of claim 14, wherein the configuration information comprises at least one of:
a transmission comb number, a second transmission comb offset, number of cyclic shifts, or maximum number of cyclic shifts.

22. A resource mapping apparatus for a reference signal (RS), comprising:

an obtaining unit configured to obtain configuration information via a communication unit; and
a determining unit configured to determine a first transmission comb offset corresponding to each of L sounding reference signal (SRS) antenna ports in an SRS resource, the first transmission comb offset being used to determine a frequency-domain starting position corresponding to each of the L SRS antenna ports, and a value of L being an integer greater than 4.

23. The apparatus of claim 22, wherein

among the L SRS antenna ports, first transmission comb offsets respectively corresponding to SRS antenna ports each with an odd port index are equal; and

among the L SRS antenna ports, first transmission comb offsets respectively corresponding to SRS antenna ports each with an even port index are equal.

24. The apparatus of claim 22, wherein first transmission comb offsets respectively corresponding to the L SRS antenna ports are equal.

25. The apparatus of claim 22, wherein

among SRS antenna ports each with an odd port index in the L SRS antenna ports, first transmission comb offsets respectively corresponding to SRS antenna ports each with a port index belonging to first M port indexes are equal; and

among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, wherein M is a positive integer, N is a positive integer, and M + N < L.

26. The apparatus of claim 22, wherein

among SRS antenna ports each with an even port index in the L SRS antenna ports, first transmission comb offsets respectively corresponding to SRS antenna ports each with a port index belonging to first P port indexes are equal; and

among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, wherein P is a positive integer, T is a positive integer, and P+T<L.

**27.** The apparatus of claim 22, wherein the L SRS antenna ports are mapped to a same orthogonal frequency division multiplexing (OFDM) symbol.

**28.** The apparatus of claim 22, wherein

among the L SRS antenna ports, SRS antenna ports each with a port index belonging to first S port indexes are mapped to a same first OFDM symbol; and
among the L SRS antenna ports, except the SRS antenna ports each with a port index belonging to the first S port indexes, SRS antenna ports each with a port index belonging to the remaining port indexes are mapped to a same second OFDM symbol, wherein S is a positive integer, and S < L.

**29.** The apparatus of claim 22, wherein the configuration information comprises at least one of:
a transmission comb number, a second transmission comb offset, number of cyclic shifts, or maximum number of cyclic shifts.

**30.** The apparatus of claim 29, wherein the determining unit configured to determine, according to the configuration information, the first transmission comb offset corresponding to each of the L SRS antenna ports, is configured to:
determine, according to the transmission comb number and/or the second transmission comb offset, the first transmission comb offset corresponding to each of the L SRS antenna ports.

**31.** The apparatus of claim 30, wherein the determining unit configured to determine, according to the transmission comb number and/or the second transmission comb offset, the first transmission comb offset corresponding to each of the L SRS antenna ports, is configured to:

determine, according to a first formula, the first transmission comb offset corresponding to each of the L SRS antenna ports, wherein the first formula is:

$$k_{\mathrm{TC}}^{(p_i)} = \left(\bar{k}_{\mathrm{TC}} + \omega^{(p_i)} K_{\mathrm{TC}}\right) \mathrm{mod} K_{\mathrm{TC}};$$

wherein $k_{\mathrm{TC}}^{(p_i)}$ represents the first transmission comb offset, $K_{\mathrm{TC}}$ represents the transmission comb number, $\bar{k}_{\mathrm{TC}}$ represents the second transmission comb offset, and $\omega^{(p_i)}$ is a positive rational number or 0.

**32.** The apparatus of claim 30, wherein the determining unit configured to determine, according to the transmission comb number and/or the second transmission comb offset, the first transmission comb offset corresponding to each of the L SRS antenna ports, is configured to:

determine, according to a second formula, the first transmission comb offset corresponding to each of the L SRS antenna ports, wherein the second formula is:

$$k_{\mathrm{TC}}^{(p_i)} = \bar{k}_{\mathrm{TC}};$$

wherein $k_{\mathrm{TC}}^{(p_i)}$ represents the first transmission comb offset, and $\bar{k}_{\mathrm{TC}}$ represents the second transmission comb offset.

**33.** The apparatus of claim 29, wherein the determining unit configured to determine, according to the configuration information, the first transmission comb offset corresponding to each of the L SRS antenna ports, is configured to:
determine the first transmission comb offset corresponding to each of the L SRS antenna ports, according to the transmission comb number, the second transmission comb offset, the number of cyclic shifts, and the maximum number of cyclic shifts.

**34.** The apparatus of claim 33, wherein the determining unit configured to determine the first transmission comb offset corresponding to each of the L SRS antenna ports, according to the transmission comb number, the second transmission comb offset, the number of cyclic shifts, and the maximum number of cyclic shifts, is configured to:

determine, according to a third formula, the first transmission comb offset corresponding to each of the L SRS antenna ports, wherein the third formula is:

$$k_{\mathrm{TC}}^{(p_i)} = \left(\bar{k}_{\mathrm{TC}} + \omega^{(p_i)} K_{\mathrm{TC}}\right) \mathrm{mod} K_{\mathrm{TC}}, \text{ and } n_{\mathrm{SRS}}^{\mathrm{cs}} \in \left\{n_{\mathrm{SRS}}^{\mathrm{cs,max}}/s^{(p_i)}, \ldots, n_{\mathrm{SRS}}^{\mathrm{cs,max}} - 1\right\};$$

wherein $k_{\mathrm{TC}}^{(p_i)}$ represents the first transmission comb offset, $K_{\mathrm{TC}}$ represents the transmission comb number, $\bar{k}_{\mathrm{TC}}$ represents the second transmission comb offset, $n_{\mathrm{SRS}}^{\mathrm{cs}}$ represents the number of cyclic shifts, $n_{\mathrm{SRS}}^{\mathrm{cs,max}}$ represents the maximum number of cyclic shifts, $\omega^{(p_i)}$ is a positive rational number or 0, and $s^{(p_i)}$ is a positive integer..

35. A resource mapping apparatus for a reference signal (RS), comprising:

a transmitting unit configured to transmit configuration information, the configuration information being used to determine a first transmission comb offset corresponding to each of L sounding reference signal (SRS) antenna ports in an SRS resource, the first transmission comb offset being used to determine a frequency-domain starting position corresponding to each of the L SRS antenna ports, and a value of L being an integer greater than 4.

36. The apparatus of claim 35, wherein

among the L SRS antenna ports, first transmission comb offsets respectively corresponding to SRS antenna ports each with an odd port index are equal; and
among the L SRS antenna ports, first transmission comb offsets respectively corresponding to SRS antenna ports each with an even port index are equal.

37. The apparatus of claim 35, wherein first transmission comb offsets respectively corresponding to the L SRS antenna ports are equal.

38. The apparatus of claim 35, wherein

among SRS antenna ports each with an odd port index in the L SRS antenna ports, first transmission comb offsets respectively corresponding to SRS antenna ports each with a port index belonging to first M port indexes are equal; and
among the SRS antenna ports each with an odd port index in the L SRS antenna ports, except the SRS antenna ports each with a port index belonging to the first M port indexes, first transmission comb offsets respectively corresponding to SRS antenna ports each with a port index belonging to first N port indexes are equal, wherein M is a positive integer, N is a positive integer, and M + N < L.

39. The apparatus of claim 35, wherein

among SRS antenna ports each with an even port index in the L SRS antenna ports, first transmission comb offsets respectively corresponding to SRS antenna ports each with a port index belonging to first P port indexes are equal; and
among the SRS antenna ports each with an even port index in the L SRS antenna ports, except the SRS antenna ports each with a port index belonging to the first P port indexes, first transmission comb offsets respectively corresponding to SRS antenna ports each with a port index belonging to first T port indexes are equal, wherein P is a positive integer, T is a positive integer, and P+T<L.

40. The apparatus of claim 35, wherein the L SRS antenna ports are mapped to a same orthogonal frequency division multiplexing (OFDM) symbol.

41. The apparatus of claim 35, wherein

among the L SRS antenna ports, SRS antenna ports each with a port index belonging to first R port indexes are mapped to a same first OFDM symbol; and
among the L SRS antenna ports, except the SRS antenna ports each with a port index belonging to the first R port indexes, SRS antenna ports each with a port index belonging to the remaining port indexes are mapped to a same second OFDM symbol, wherein S is a positive integer, and R < L.

42. The apparatus of claim 35, wherein the configuration information comprises at least one of:
a transmission comb number, a second transmission comb offset, number of cyclic shifts, or maximum number of cyclic shifts.

43. A terminal device, comprising a processor, a memory, and computer programs or instructions stored in the memory, the processor being configured to execute the computer programs or instructions to implement the operations of the method of any one of claims 1 to 13.

44. A network device, comprising a processor, a memory, and computer programs or instructions stored in the memory, the processor being configured to execute the computer programs or instructions to implement the operations of the method of any one of claims 14 to 22.

45. A computer-readable storage medium configured to store computer programs or instructions, wherein when the computer programs or instructions are executed, the operations of the method of any one of claims 1 to 13 or claims 14 to 22 are implemented.

46. A chip comprising a processor, the processor being configured to implement the operations of the method of any one of claims 1 to 13 or claims 14 to 22.

FIG. 1

S210, TRANSMIT CONFIGURATION INFORMATION

S220, DETERMINE A FIRST TRANSMISSION COMB OFFSET CORRESPONDING TO EACH OF L SRS ANTENNA PORTS IN AN SRS RESOURCE, ACCORDING TO THE CONFIGURATION INFORMATION, WHERE THE FIRST TRANSMISSION COMB OFFSET IS USED TO DETERMINE THE FREQUENCY-DOMAIN STARTING POSITION OF EACH OF THE L SRS ANTENNA PORTS

FIG. 2

300

RESOURCE MAPPING
APPARATUS FOR AN RS

301

OBTAINING
UNIT

302

DETERMINING
UNIT

FIG. 3

400

RESOURCE MAPPING
APPARATUS FOR AN RS

401

TRANSMITTING
UNIT

FIG. 4

TERMINAL DEVICE 500

PROCESSOR
510

MEMORY 520

COMPUTER PROGRAMS OR
INSTRUCTIONS 521

FIG. 5

NETWORK DEVICE 600

PROCESSOR
610

MEMORY 620

COMPUTER PROGRAMS OR
INSTRUCTIONS 621

FIG. 6

<table>
<tr><td colspan="2" align="center">**INTERNATIONAL SEARCH REPORT**</td><td>International application No.<br>**PCT/CN2022/125699**</td></tr>
</table>

| A. | CLASSIFICATION OF SUBJECT MATTER |
|---|---|
| | H04L 5/00(2006.01)i; H04W 72/04(2009.01)i |

According to International Patent Classification (IPC) or to both national classification and IPC

| B. | FIELDS SEARCHED |
|---|---|

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; EPTXT; USTXT; WOTXT; 3GPP: SRS, 资源, 配置, 梳, 偏移, 天线端口, 数量, 索引, 起始, 开始, 频域, antenna, port?, comb offset, beginning, starting, RE, resource, frequency, index, number

| C. | DOCUMENTS CONSIDERED TO BE RELEVANT |
|---|---|

| Category* | Citation of document, with indication, where appropriate, of the relevant passages | Relevant to claim No. |
|---|---|---|
| X | VIVO. "R1-1908175"<br>*Discussion on UL RS for NR positioning,* 17 August 2019 (2019-08-17),<br>　　section 2 | 1-46 |
| X | WO 2021089732 A1 (FRAUNHOFER-GESELLSCHAFT ZUR FÖRDERUNG DER ANGEWANDTEN FORSCHUNG E. V.) 14 May 2021 (2021-05-14)<br>　　description, page 6, line 6 to page 37, line 34 | 1-46 |
| A | CN 111865524 A (HUAWEI TECHNOLOGIES CO., LTD.) 30 October 2020 (2020-10-30)<br>　　entire document | 1-46 |
| A | VIVO. "R1-2005368"<br>*Discussion on SRS enhancement,* 08 August 2020 (2020-08-08),<br>　　entire document | 1-46 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2022** | **06 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/125699**

| Patent document cited in search report | | | Publication date (day/month/year) | Patent family member(s) | | | Publication date (day/month/year) |
|---|---|---|---|---|---|---|---|
| WO | 2021089732 | A1 | 14 May 2021 | US | 2022271982 | A1 | 25 August 2022 |
| | | | | EP | 3820102 | A1 | 12 May 2021 |
| | | | | EP | 3820101 | A1 | 12 May 2021 |
| | | | | CN | 114946162 | A | 26 August 2022 |
| | | | | EP | 4055789 | A1 | 14 September 2022 |
| CN | 111865524 | A | 30 October 2020 | None | | | |

Form PCT/ISA/210 (patent family annex) (January 2015)